# EUROPEAN PATENT APPLICATION

(11) **EP 4 645 084 A1**
(43) Date of publication of application: **05.11.2025**
(21) Application number: 24901771.6
(22) Date of filing: 04.06.2024
(51) Int. Cl.: G06F 9/50

(54) **INFORMATION PROCESSING METHOD AND APPARATUS, RESOURCE ALLOCATION METHOD AND APPARATUS, AND ELECTRONIC DEVICE**

(30) Priority: 14.03.2024 CN 202410296707
(71) Applicant: Hygon Information Technology Co., Ltd., Tianjin 300392 (CN)
(72) Inventor: LIN, Zhixiang, Binhai New Area, Tianjin 300392 (CN); JIN, Weisong, Binhai New Area, Tianjin 300392 (CN)
(74) Representative: Regimbeau
(86) International application number: PCT/CN2024/097270
(87) International publication number: WO 2025/189576

(57) **Abstract**

An information processing method and apparatus, a resource allocation method and apparatus, an electronic device and a storage medium are provided. The information processing method includes: collecting performance data generated by a processor in a process of executing a task, wherein the processor simultaneously runs a plurality of threads to execute the task, and the performance data indicates a demand degree and/or a demand timing of each thread of the threads for different hardware resources in the processor; generating compiling indication information corresponding to the task according to the performance data; and inserting the compiling indication information into a compiling program of the task to obtain an optimized compiling program corresponding to the task, wherein the compiling indication information is used for allocating the hardware resources of the processor when the processor runs the optimized compiling program. The information processing method can control or divide the resources used by threads in a targeted manner according to the profiles of the program itself, making the resource allocation more reasonable and effectively improving the performance of the processor.

## Description

The present application claims the priority of Chinese Patent Application No.202410296707.5 filed on March 14, 2024, which is hereby incorporated by reference in its entirety as part of the present application.

### TECHNICAL FIELD

Embodiments of the present disclosure relate to an information processing method, a resource allocation method, an information processing apparatus, a resource allocation apparatus, an electronic device and a non-transitory computer-readable storage medium.

### BACKGROUND

A simulate multi-threading (SMT) technology is an important technology to improve the overall performance of a processor. It uses a mechanism of multi-issue, out-of-order execution, etc. of a high-performance processing core (for example, a central processing unit (CPU) core) to execute instructions of a plurality of threads at the same time, so that one physical core presents to software and an operating system as multiple virtual processing cores. When the modern multi-issue high-performance processing core executes a single thread, its internal execution units and hardware resources cannot be fully utilized most of the time; when the thread stalls for some reason (such as an L2 cache miss), the hardware execution units can only idle, which wastes hardware resources and reduces the performance per watt. In an SMT mode, when one thread stalls, other threads can still run, which improves a utilization rate of hardware resources, thus improving the multi-thread throughput, the overall performance and the performance per watt of the processor.

### SUMMARY

At least an embodiment of the present disclosure provides an information processing method, including: collecting performance data generated by a processor in a process of executing a task, wherein the processor simultaneously runs a plurality of threads to execute the task, and the performance data indicates a demand degree and/or a demand timing of each thread of the threads for different hardware resources in the processor; generating compiling indication information corresponding to the task according to the performance data; and inserting the compiling indication information into a compiling program of the task to obtain an optimized compiling program corresponding to the task, wherein the compiling indication information is used for allocating the hardware resources of the processor when the processor runs the optimized compiling program.

For example, in the information processing method provided by at least one embodiment of the present disclosure, the performance data includes occupation situations of the different hardware resources by the processor in the process of running the task, and the generating compiling indication information corresponding to the task according to the performance data includes: determining a criticality degree of each hardware resource to each thread according to the occupation situations of the different hardware resources by the processor in the process of running the task; and generating the compiling indication information in combination with the criticality degree of each hardware resource to each thread, wherein the compiling indication information is used for adjusting an occupation ratio and/or a dynamic usage range of each hardware resource by each thread according to the criticality degree of each hardware resource to each thread when the optimized compiling program is run.

For example, in the information processing method provided by at least one embodiment of the present disclosure, for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, the compiling indication information is used for instructing to decrease an allocation ratio of the any hardware resource allocated to the N threads or to limit a dynamic usage range of the N threads to the any hardware resource when the optimized compiling program is run, where M and N are positive integers.

For example, in the information processing method provided by at least one embodiment of the present disclosure, the any hardware resource includes a cache, the occupation situations of the different hardware resources by the processor in the process of running the task include a number of occupation times each thread occupies the cache, and the determining a criticality degree of each hardware resource to each thread according to the occupation situations of the different hardware resources by the processor in the process of running the task includes: for each thread: determining the criticality degree of the cache to the thread according to the number of occupation times the thread occupies the cache, wherein the less the number of occupation times the thread occupies the cache is, the lower the criticality degree of the cache to the thread is; wherein the compiling indication information is used for instructing to decrease an allocation ratio of the cache allocated to the N threads, or to limit the N threads from selecting a cache line from cache lines occupied by the N threads for cache replacement when cache replacement occurs, when the optimized compiling program is run.

For example, in the information processing method provided by at least one embodiment of the present disclosure, the any hardware resource includes a branch target table, and various branch target table entries in the branch target table are used for storing information related to branch jumps, the occupation situations of the different hardware resources by the processor in the process of running the task include branch prediction accuracy of each branch in each thread, the determining a criticality degree of each hardware resource to each thread according to the occupation situations of the different hardware resources by the processor in the process of running the task includes: for each thread: determining the criticality degree of the branch target table to the thread according to a number of branches in the thread with branch prediction accuracy lower than an accuracy threshold, wherein the higher the number of the branches in the thread with the branch prediction accuracy lower than the accuracy threshold is, the lower the criticality degree of the branch target table to the thread is; wherein the compiling indication information is used for instructing to decrease an allocation ratio of the branch target table allocated to the N threads, or to limit the N threads from selecting a branch target table entry from occupied branch target table entries when applying for the branch target table entries, when the optimized compiling program is run.

For example, in the information processing method provided by at least one embodiment of the present disclosure, the occupation situations of the different hardware resources by the processor in the process of running the task include the total occupation amount of each hardware resource by each thread in a preset time period for running the task, and the determining a criticality degree of each hardware resource to each thread according to the occupation situations of the different hardware resources by the processor in the process of running the task includes: determining the criticality degree of each hardware resource to each thread according to the total occupation amounts of the hardware resources by the plurality of threads.

For example, in the information processing method provided by at least one embodiment of the present disclosure, the determining the criticality degree of each hardware resource to each thread according to the total occupation amounts of the hardware resources by the plurality of threads includes: for a first hardware resource of the different hardware resources: for each thread, in response to the total occupation amount of the first hardware resource by the thread being less than B/b, determining that the criticality degree of the first hardware resource to the thread is non-critical, wherein the first hardware resource is a hardware resource used exclusively by the plurality of threads separately, B represents a total resource amount of the first hardware resources, b represents a total number of the plurality of threads, and B and b are integers greater than 1; wherein, in response to the criticality degree of the first hardware resource to at least one thread of the plurality of threads being non-critical, the compiling indication information is used for instructing to allocate the first hardware resource for each thread in the at least one thread according to the total occupation amount of the first hardware resource occupied by each thread when the optimized compiling program is run.

For example, in the information processing method provided by at least one embodiment of the present disclosure, the determining the criticality degree of each hardware resource to each thread according to the total occupation amounts of the hardware resources by the plurality of threads includes: for any hardware resource, determining a sum of the total occupation amounts of the any hardware resource by the plurality of threads according to the total occupation amount of the any hardware resource by each thread; in response to the sum of the total occupation amounts being greater than a total resource amount of the any hardware resource: determining a total duration of pipeline stalling when each thread lacks the any hardware resource; and determining the criticality degree of the any hardware resource to each thread according to the total duration of the pipeline stalling of each thread, wherein the total duration of the pipeline stalling of each thread is positively correlated with the criticality degree; wherein the compiling indication information is used for instructing to increase the allocation ratio of the any hardware resource to the thread with higher criticality degree and decrease the allocation ratio of the any hardware resource to the thread with lower criticality degree when the optimized compiling program is run.

For example, in the information processing method provided by at least one embodiment of the present disclosure, for any hardware resource, in response to the criticality degree of the any hardware resource to M threads of the plurality of threads being greater than a first threshold and the criticality degree of the any hardware resource to N threads of the plurality of threads being less than a second threshold, the compiling indication information is used for instructing to increase an allocation ratio of the any hardware resource allocated to the M threads when the optimized compiling program is run.

For example, in the information processing method provided by at least one embodiment of the present disclosure, the determining a criticality degree of each hardware resource to each thread according to the occupation situations of the different hardware resources by the processor in the process of running the task includes: determining a proportion of a total duration or stalling time of the pipeline stalling of each thread caused by a lack of the any hardware resource in the total running duration according to a duration of pipeline interruption or stalling of each thread when the thread lacks the any hardware resource and a number of times the thread lacks the any hardware resource; and determining the criticality degree of the thread to the any hardware resource according to the total duration or the proportion.

For example, in the information processing method provided by at least one embodiment of the present disclosure, the occupation situations of the different hardware resources by the processor in the process of running the task include any combinations of the following parameters: a number of occupation times each thread occupies each hardware resource, a number of stalling times of a pipeline when each thread lacks each hardware resource, a stalling duration of the pipeline when each thread lacks each hardware resource, the total occupation amount of each hardware resource by each thread, and branch prediction accuracy of each branch in each thread.

For example, in the information processing method provided by at least one embodiment of the present disclosure, the performance data includes distribution of time when the plurality of threads occupy various hardware resources when the processor runs the task, and the generating compiling indication information corresponding to the task according to the performance data includes: generating the compiling indication information in combination with the distribution of time when the plurality of threads occupy various hardware resources when the processor runs the task, wherein the compiling indication information is used for controlling an occupation timing of each thread occupying each hardware resource according to the distribution of time when the plurality of threads occupy various hardware resources when the optimized compiling program is run.

For example, in the information processing method provided by at least one embodiment of the present disclosure, the compiling indication information is used for reserving a target hardware resource for the thread when a usage timing of the target hardware resource is approaching according to the distribution of time when the plurality of threads occupy various hardware resources when the optimized compiling program is run.

For example, in the information processing method provided by at least one embodiment of the present disclosure, the performance data includes a dependency between hardware resources used by each thread in the process of running the task by the processor, the generating compiling indication information corresponding to the task according to the performance data includes: generating the compiling indication information in combination with the dependency between the hardware resources used by each thread, wherein the compiling indication information is used for controlling an occupation timing or a resource occupation priority of the thread occupying the hardware resources used by each thread according to the dependency between the hardware resources used by each thread when the optimized compiling program is run.

For example, in the information processing method provided by at least one embodiment of the present disclosure, in response to a dependency existing between P hardware resources used by the thread to execute a first operation, the P hardware resources includes a target hardware resource, and P is a positive integer greater than 1, the compiling indication information is used for instructing to allocate an occupation right of the target hardware resource to the thread after remaining P-1 hardware resources except the target hardware resource return usage data required for executing the first operation, or to improve the resource occupation priority of the thread to the target hardware resource, when the optimized compiling program is run.

For example, in the information processing method provided by at least one embodiment of the present disclosure, the dependency between the hardware resources used by each thread is obtained by occupation situations of a plurality of hardware resources during pipeline stalling of each thread, wherein the plurality of hardware resources include other hardware resources of the different hardware resources except the hardware resource that directly leads to the pipeline stalling of the thread.

For example, in the information processing method provided by at least one embodiment of the present disclosure, the hardware resources in the processor include computing resources and storage resources, the computing resources include an arithmetic and logic unit and an address generation unit, and the storage resources include a cache, an internal memory, a queue and a register.

For example, in the information processing method provided by at least one embodiment of the present disclosure, the processor includes at least one physical core, and the plurality of threads run in the same physical core.

At least an embodiment of the present disclosure provides a resource allocation method, including: allocating hardware resources of a processor used when the processor executes a task according to compiling indication information, wherein the compiling indication information is generated according to performance data generated by the processor in a process of running a compiling program corresponding to the task, the processor simultaneously runs a plurality of threads to execute the task, and the performance data indicates a demand degree and/or a demand timing of each thread of the threads for different hardware resources in the processor.

For example, in the resource allocation method provided by at least one embodiment of the present disclosure, the allocating hardware resources of a processor used when the processor executes a task according to compiling indication information includes: determining a criticality degree of each hardware resource to each thread according to the compiling indication information; and adjusting an occupation ratio and/or a dynamic usage range of each hardware resource by each thread according to the criticality degree of each hardware resource to each thread.

For example, in the resource allocation method provided by at least one embodiment of the present disclosure, the adjusting an occupation ratio and/or a dynamic usage range of each hardware resource by each thread according to the criticality degree of each hardware resource to each thread includes: for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, decreasing an allocation ratio of the any hardware resource allocated to the N threads or to limit a dynamic usage range of the N threads to the any hardware resource, where M and N are positive integers.

For example, in the resource allocation method provided by at least one embodiment of the present disclosure, the any hardware resource includes a cache, the adjusting an occupation ratio and/or a dynamic usage range of each hardware resource by each thread according to the criticality degree of each hardware resource to each thread includes: decreasing an allocation ratio of the cache allocated to the N threads, or limiting the N threads from selecting a cache line from cache lines occupied by the N threads for cache replacement when cache replacement occurs.

For example, in the resource allocation method provided by at least one embodiment of the present disclosure, the any hardware resource includes a branch target table, and various branch target table entries in the branch target table are used for storing information related to branch jumps, the adjusting an occupation ratio and/or a dynamic usage range of each hardware resource by each thread according to the criticality degree of each hardware resource to each thread includes: decreasing an allocation ratio of the branch target table allocated to the N threads, or limiting the N threads from selecting a branch target table entry from the occupied branch target table entries when applying for the branch target table entries.

For example, in the resource allocation method provided by at least one embodiment of the present disclosure, the any hardware resource includes a first hardware resource, and the first hardware resource is used exclusively by the plurality of threads separately, the adjusting an occupation ratio and/or a dynamic usage range of each hardware resource by each thread according to the criticality degree of each hardware resource to each thread includes: in response to the criticality degree of the first hardware resource to at least one thread of the plurality of threads being non-critical, for each thread in the at least one thread, allocating the first hardware resource according to the total occupation amount of the first hardware resource occupied by each thread, wherein the total occupation amount of the first hardware resource occupied by each thread is determined in a process of collecting the performance data.

For example, in the resource allocation method provided by at least one embodiment of the present disclosure, the adjusting an occupation ratio and/or a dynamic usage range of each hardware resource by each thread according to the criticality degree of each hardware resource to each thread includes: for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, increasing an allocation ratio of the any hardware resource allocated to the M threads.

For example, in the resource allocation method provided by at least one embodiment of the present disclosure, the allocating hardware resources of a processor used when the processor executes a task according to compiling indication information includes: controlling an occupation timing or a resource occupation priority of each thread occupying each hardware resource according to the compiling indication information.

For example, in the resource allocation method provided by at least one embodiment of the present disclosure, in response to a dependency existing between P hardware resources used by the thread to execute a first operation, the P hardware resources includes a target hardware resource, and P is a positive integer greater than 1, the controlling an occupation timing or a resource occupation priority of each thread occupying each hardware resource according to the compiling indication information includes: allocating, according to the compiling indication information, an occupation right of the target hardware resource to the thread after the remaining P-1 hardware resources except the target hardware resource return usage data required for executing the first operation, or improving the resource occupation priority of the thread to the target hardware resource.

At least an embodiment of the present disclosure provides an information processing apparatus, including: a collection module configured to collect performance data generated by a processor in a process of executing a task, wherein the processor simultaneously runs a plurality of threads to execute the task, and the performance data indicates a demand degree and/or a demand timing of each thread of the threads for different hardware resources in the processor; a generation module configured to generate compiling indication information corresponding to the task according to the performance data; and an insertion module configured to insert the compiling indication information into a compiling program of the task to obtain an optimized compiling program corresponding to the task, wherein the compiling indication information is used for allocating the hardware resources of the processor when the processor runs the optimized compiling program.

At least an embodiment of the present disclosure provides a resource allocation apparatus, including: an allocation module configured to allocate hardware resources of a processor used when the processor executes a task according to compiling indication information, wherein the compiling indication information is generated according to performance data generated by the processor in a process of running a compiling program corresponding to the task, the processor simultaneously runs a plurality of threads to execute the task, and the performance data indicates a demand degree and/or a demand timing of each thread of the threads for different hardware resources in the processor.

At least an embodiment of the present disclosure provides an electronic device, including: a memory in which computer-executable instructions are stored non-instantaneously; a processor configured to run the computer-executable instructions, wherein the computer-executable instructions, when run by the processor, implement the information processing method according to any one of embodiments of the present disclosure or execute the resource allocation method according to any one of embodiments of the present disclosure.

At least an embodiment of the present disclosure provides a non-transitory computer-readable storage medium, wherein the non-transitory computer-readable storage medium stores computer-executable instructions which, when executed by a processor, implements the information processing method according to any one of embodiments of the present disclosure or execute the resource allocation method according to any one of embodiments of the present disclosure.

### BRIEF DESCRIPTION OF DRAWINGS

In order to illustrate the technical solutions of the embodiments of the present disclosure more clearly, the drawings required for describing the embodiments will be briefly described below. Apparently, the drawings described below only relate to some embodiments of the present disclosure and do not limit the present disclosure.
Fig. 1 is a schematic diagram of a profile-guided optimization;
Fig. 2 is a schematic flowchart of an information processing method provided by at least an embodiment of the present disclosure;
Fig. 3 is a schematic flowchart of a resource allocation method provided by at least an embodiment of the present disclosure;
Fig. 4 is a schematic block diagram of an information processing apparatus provided by at least an embodiment of the present disclosure;
Fig. 5 is a schematic block diagram of a resource allocation apparatus provided by at least an embodiment of the present disclosure.
Fig. 6 is a schematic structural diagram of an electronic device provided by at least an embodiment of the present disclosure; and
Fig. 7 is a schematic diagram of a non-transitory computer-readable storage medium provided by at least an embodiment of the present disclosure.

### DETAILED DESCRIPTION

In order to make the objectives, technical solutions, and advantages of the embodiments of the present disclosure clearer, the technical solutions in the embodiments of the present disclosure are clearly and completely described below with reference to the drawings in the embodiments of the present disclosure. Apparently, the described embodiments are merely a part rather than all of the embodiments of the present disclosure. Based on the described embodiments of the present disclosure, all other embodiments obtained by those of ordinary skill in the art without creative efforts shall fall within the protection scope of the present disclosure.

Unless otherwise defined, the technical or scientific terms used in the present disclosure shall have the ordinary meanings understood by those of ordinary skill in the art to which the present disclosure belongs. Terms such as "first", "second" and similar expressions used in the present disclosure do not denote any order, quantity or importance, but are merely used to distinguish different components. Terms such as "include" or "comprise" or similar expressions mean that the elements or objects preceding the term cover the elements or objects listed after the term and their equivalents, without excluding other elements or objects. Terms such as "connect" or "link" or similar expressions are not limited to physical or mechanical connections, but may include electrical connections, whether direct or indirect. Terms such as "up", "down", "left", and "right" are only used to indicate relative positional relationships, and when the absolute position of the described object changes, the relative positional relationship may also change accordingly.

To keep the following description of the embodiments of the present disclosure clear and concise, detailed descriptions of some known functions and known components are omitted in the present disclosure.

Generally, there are multiple pipeline stages in modern processing cores, such as Branch prediction, Instruction fetch, Decode, Dispatch and Rename, Execute, Retire and so on. In order to support high running frequency, each pipeline stage may contain multiple pipeline levels. An important feature of the SMT is that instructions in a same instruction execution pipeline level may come from a plurality of threads in a same clock cycle; while in other pipeline stages, instructions of one thread usually can be selected and processed by only one clock cycle. Therefore, in these stages, it is necessary to select one from the plurality of threads to pass to the next pipeline stage, which is called thread scheduling. The choice of thread scheduling has an important influence on the overall performance, the power consumption and fairness between threads of the SMT.

According to a maximum number of active threads supported, the SMT can be called SMT2 (up to two active threads), SMT4 (up to four active threads) and so on.

There are different ways to allocate internal hardware resources of the SMT. Commonly used ways include:
1. All statically partitioned: all hardware resources are partitioned equally according to the maximum number of active threads supported by the SMT.
2. All dynamically shared: all hardware resources are dynamically shared by all threads.
3. Mixed mode: some hardware resources are dynamically shared by all threads, while others are statically partitioned.
4. Other ways: a plurality of threads can be divided into a plurality of thread groups, and all resources are all statically partitioned between different thread groups, but internal resources of a thread group are all dynamically shared.

In a process of compiling a program, by specifying an optimization level, a compiler can perform performance optimization with different degrees of aggressiveness, including but not limited to code reordering, code vectorization and other compiling technologies.

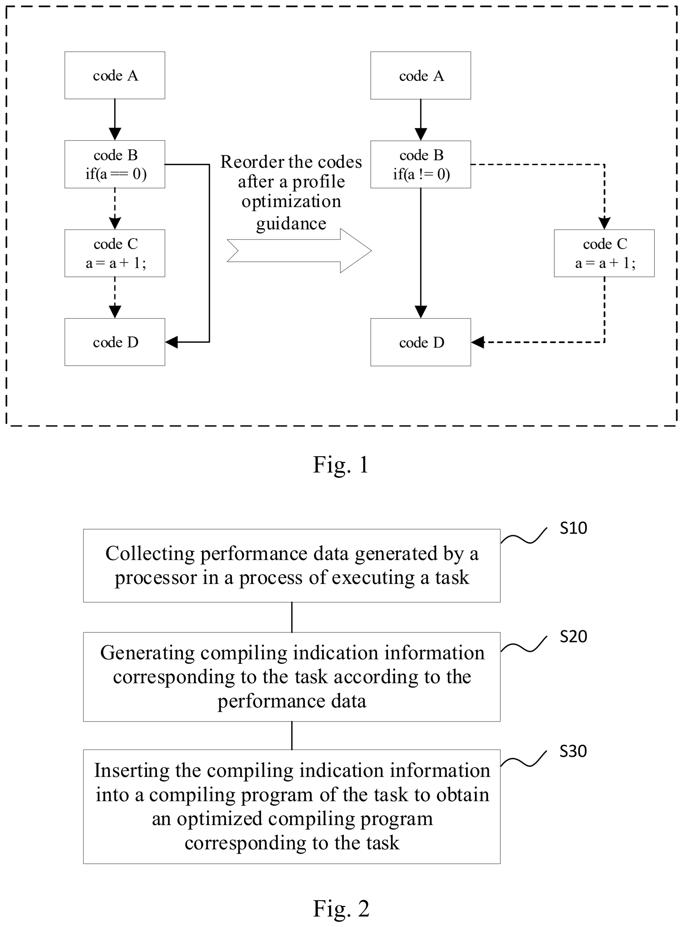

Fig. 1 is a schematic diagram of a profile-guided optimization.

For example, a program may be run once and whether the program has a certain type of behavior preference is analyzed through data collection. If so, a subsequent compiler will further optimize the program according to this behavior preference.

Take the following code as an example:

```
  code A;
  if (a == 0) // code B;
  a = a + 1; // code C;
  code D;
```

If the above codes exist, when the compiler compiles statically, there is no way to judge whether a variable a will be equal to 0 in actual running, thus the compiler chooses to follow a writing method of a high-level programming language, as shown in the left flow of Fig. 1, and translates a branch instruction (code B) according to an original meaning and puts it after the code A. At this point, program semantics are as follows: if the branch code B is established, skip code C and execute code D, and if the branch code B is not established, do not skip, but execute code C in order. That is to say, the compiler will follow syntax requirements of the high-level language itself and arrange the code A, the code B, the code C and the code D in a memory space continuously.

In Fig. 1, dashed lines indicate a command control flow that rarely occurs, and solid lines indicate a command control flow in most cases.

Assuming that a condition that A is equal to 0 has a low probability (the low probability refers to being less than 1%), then such a code arrangement space often leads to branch jumps in code B, resulting in that the CPU needs to interrupt the pipeline and re-fetch instructions and re-decode codes for the branched program flow. The CPU originally thought that the code C had been fetched when the branch jump did not occur. When the branch jump is found, the CPU needs to empty the code C (that is, subsequent codes), from the pipeline, and re-fetch instructions from an address of the code D again. This behavior will seriously affect the performance of the CPU.

At this time, through the profile-guided optimization, after collecting a situation of the branch code B when executing this program dynamically, as shown on the right side of Fig. 1, the compiler will choose to put the code of the code C in a discontinuous address space instead of putting it behind the code B. At this time, the arrangement of the code A, the code B and the code D in the memory space is continuous, and the code C is stored in another memory space which is not continuous with the code A, the code B and the Code D. Therefore, the program is executed in the order of code A->code B->code D most of the time, and the CPU performance will not be seriously affected because of the branch jumps (including code B->code D on the left side of Fig. 1 and code B->code C->code D on the right side of Fig. 1).

However, the above-mentioned compiling optimization technology only performs static analysis on the program code, does not care whether there is a certain preference in specific execution of the program, has a same optimizing logic for the execution of all the programs with profiles, cannot perform targeted optimization for different profiles of each program, and has limitations in compiling optimization.

Moreover, when the processing core uses the SMT technology, since the thread will share the hardware resource of the processing core with other threads, the performance of one thread running under the SMT is often lower than that of the thread in its single-thread mode, and the resource allocation is carried out according to the above-mentioned four ways, it is impossible to make targeted adjustment for the profiles of the program.

For example, taking SMT2 as an example, the processing core uses two threads (a thread 0 and a thread 1) to execute a task simultaneously. A cache is a dynamically shared resource, and the thread 0 and the thread 1 can share all storage space in the cache. The thread 0 is, for example, a streaming media application. A large amount of streaming media data is often used only once and will not be used again in the future. The thread 0 may possibly occupy a large amount of the cache, and then kick all data of the thread 1 out of the cache, resulting in that the thread 1 often stalls because of a cache miss, and the performance plummets. Meanwhile, while the thread 0 occupies a large amount of cache capacity, although the cache capacity is used, the performance of the processor cannot be improved due to the fact that all the data is only one-time data.

For example, the branch instruction has the ability to interrupt an instruction stream, and if the branch instruction is not handled well, the performance of the processor will be greatly affected. A branch prediction technology refers to the fact that a processor, upon encountering a branch instruction, no longer waits for a branch result all the time before fetching instructions, but instead predicts the branch "jump" or "no jump" and a jump target address directly at a fetching instruction stage, with the purpose of implementing an uninterrupted instruction flow according to a predicted result, thus reducing the CPI (Cycle Per Instruction) of the processor. The processor can use the branch target table to store prediction information of the branch, and various branch target table entries in the branch target table are used for storing relevant information of the branch jump, such as a jump direction and a jump target address.

The branch target table is a dynamically shared resource. Assuming that there are many branches in the thread 0 that are difficult to predict accurately (for example, the branches that are not directly jumped, such as jmp [mem], and the jump target address mem depends on a specific value written in the mem by a previous program), the thread 0 may possibly use many branch target table entries, but this cannot increase the branch prediction accuracy rate of the thread 0; meanwhile, the thread 1 is kicked out by the thread 0 because of the occupied branch target table entries, resulting in a failure to make branch prediction when subsequent branches come, thereby reducing the performance.

For example, for statically partitioned resources, the resources are usually distributed equally to various threads in advance and used exclusively by the various threads. However, it is likely that some threads will not use as much resources in an actual scenario, or even occasionally pipeline stalling of the processing core is caused because this resource is insufficient, the performance will not be affected seriously, and meanwhile, this resource may be urgently needed by another thread. At this time, if the resources are still partitioned equally, it will be harmful to the performance.

For example, in some cases, even if the thread 0 preempts a dynamically shared resource A, it may still need to wait for the resource B to continue execution, which may probably cause another thread 1 to stall due to the lack of the resource A. For example, the thread 0 preempts the resource A, but it needs a value returned by the resource B to perform an operation on the resource A. Therefore, before the resource B returns the value, the thread 0 occupies a large amount of the resource A, but there is no improvement in performance.

At least an embodiment of the present disclosure provides an information processing method, a resource allocation method, an information processing apparatus, a resource allocation apparatus, an electronic device and a non-transitory computer-readable storage medium.

The information processing method provided by at least an embodiment of the present disclosure includes: collecting performance data generated by a processor in a process of executing a task, where the processor simultaneously runs a plurality of threads to execute the task, and the performance data indicates a demand degree and/or a demand timing of each thread of the threads for different hardware resources in the processor; generating compiling indication information corresponding to the task according to the performance data; and inserting the compiling indication information into a compiling program of the task to obtain an optimized compiling program corresponding to the task, where the compiling indication information is used for allocating the hardware resources of the processor when the processor runs the optimized compiling program.

According to the information processing method provided by at least an embodiment of the present disclosure, customized compiling optimization can be performed according to profiles of programs running different tasks, and compiling indication information for processor resource allocation when the program runs can be obtained by collecting performance data generated by the running program, to provide a reference for the processor to run the program, so that hardware resources used by threads can be controlled or divided in a targeted manner according to the profiles of the program itself, making the resource allocation more reasonable and effectively improving the performance of the processor.

At least an embodiment of the present disclosure also provides a resource allocation method, including: allocating hardware resources of a processor used when the processor executes a task according to compiling indication information, where the compiling indication information is generated according to performance data generated by the processor in a process of executing a compiling program corresponding to the task, the processor simultaneously runs a plurality of threads to execute the task, and the performance data indicates a demand degree and/or a demand timing of each thread of the threads for different hardware resources in the processor.

The information processing method provided by at least an embodiment of the present disclosure can perform hardware resource allocation with reference to the compiling indication information obtained from the collected performance data, so that the hardware resources used by threads can be controlled or divided in a targeted manner according to the profiles of the program itself, making the resource allocation more reasonable and effectively improving the performance of the processor.

Embodiments of the present disclosure will be described in detail with reference to the drawings, but the present disclosure is not limited to these specific embodiments.

Fig. 2 is a schematic flowchart of an information processing method provided by at least an embodiment of the present disclosure. For example, as shown in Fig. 2, a data processing method provided by the embodiment of the present disclosure at least includes steps S10-S30.

For example, the information processing method is applied to a processor, such as a processor using an SMT technology.

For example, the processor includes at least one processing core, which is a physical core. One processing core uses (or runs) a plurality of threads in parallel to execute a task, and the plurality of threads can be understood as a plurality of logical cores virtualized in one physical core.

For example, a number b of the threads may be equal to or less than a maximum number of active threads supported by one physical core, and b is a positive integer greater than 1.

In step S10, collecting performance data generated by a processor in a process of executing a task.

For example, the processor runs a plurality of threads to execute the task at the same time. For example, the processor uses simulate multi-threading to execute the task, the plurality of threads are located in the same physical core, and the plurality of threads share hardware resources in the physical core, the sharing includes static sharing and static sharing.

For example, the hardware resources include computing resources and storage resources in the processor. For example, the computing resources include hardware resources for computing such as an arithmetic and logic unit (ALU) and an address generation unit (AGU). For example, the storage resources include a cache, an internal memory, a queue, a register and other hardware resources for caching data or instructions related to pipelines.

For example, in some examples, the hardware resources may refer to all resources in the processor that can be used for computing or storage.

For example, the hardware resources may also refer to some computing or storage resources in the processor. For example, after analyzing the collected performance data of multiple tasks, it is found that some hardware resources are sufficient for most of the tasks, or the lack of these hardware resources will not have a great impact on the performance of the processor, these hardware resources do not need to be subjected to resource allocation optimization, or the performance of the processor cannot be improved even if these hardware resources are subjected to resource allocation optimization, so that the hardware resources in the present disclosure may include other hardware resources in the processor except these hardware resources.

For example, the performance data may be collected by executing the compiling program corresponding to the task. For example, the compiling program is obtained after a compiler compiles a program corresponding to the task based on conventional optimization rules and general optimization logic. The compiling program may be a compiling program that has not been subjected to compiling optimization, or a compiling program that has been optimized after static analysis of analysis code itself, such as code reordering.

For example, the task may be deployed on a processor using the SMT technology, and performance data in a task running process is collected after the compiling program runs for a period of time.

For example, the performance data may indicate a demand degree of the plurality of threads for different hardware resources in the processor. For example, by analyzing the performance data, demand degrees of different threads for various hardware resources can be judged.

For example, for a thread 0 included in a plurality of threads, if the lack of a certain hardware resource will interrupt or stall the thread 0 and this interruption or stalling has a great impact on the performance of the processor, the demand degree of the thread 0 for the hardware resource is relatively high, and this hardware resource is more critical to the thread 0. On the contrary, if the lack of a certain hardware resource will not interrupt or stall the thread 0, or even if the interruption or stalling occurs, it does not have much impact on the performance of the processor, the demand degree of the thread 0 to the hardware resource is relatively low, and this hardware resource is also less critical to the thread 0.

For example, the performance data may indicate a demand timing of the plurality of threads for different hardware resources in the processor. For example, by analyzing the performance data, timing when different threads need to occupy various hardware resources can be obtained.

In step S20, generating compiling indication information corresponding to the task according to the performance data.

In step S30, inserting the compiling indication information into a compiling program of the task to obtain an optimized compiling program corresponding to the task.

For example, the compiling indication information is used for allocating the hardware resources of the processor when the processor runs the optimized compiling program.

For example, the compiling indication information corresponds to tasks one by one, and different programs executing different tasks have different compiling indication information, the compiling indication information provides a reference for the processor to allocate hardware resources according to the program characteristics of the corresponding tasks.

For example, the compiling indication information may directly include performance data, that is, the performance data can be provided to the processor as the compiling indication information, and the processor analyzes the performance data in the compiling indication information when running the optimized compiling program, to determine the allocation of the hardware resources to the processor. In this embodiment, a process of analyzing the performance data by the processor is similar to a process of generating the compiling indication information as an analysis result described later, which is omitted here.

For example, the performance data may also be analyzed and processed to obtain compiling indication information which provides analysis results of the demand degrees or criticality degrees of some threads for different hardware resources, and the processor may allocate resources directly according to the compiling indication information, thus saving analysis time and reducing a data transmission volume.

For example, the compiling indication information may be inserted into a header of the compiling program or other agreed positions to obtain an optimized compiling program, which can perform targeted compiling optimization according to the profiles of tasks. Different from compiling optimization based on general scenarios or static code analysis, the optimized compiling program can perform targeted compiling optimization, mainly reflected in the allocation of hardware resources, according to the profiles of the program itself in the running process, so that the hardware resources can be allocated more reasonably and the performance of the processor can be improved.

For example, when running the optimized compiling program, the processor can allocate the hardware resources of the processor with reference to the compiling indication information. For example, allocating the hardware resources may include at least one of adjusting a resource allocation ratio and controlling resource occupation timing. The following describes a specific process of generating the compiling indication information with respect to the above-mentioned two allocation methods.

For example, the performance data includes occupation situations of the different hardware resources by the processor in the process of executing the task.

Step S20 may include: determining a criticality degree of each hardware resource to each thread according to the occupation situations of the different hardware resources by the processor in the process of executing the task; and generating the compiling indication information in combination with the criticality degree of each hardware resource to each thread, where the compiling indication information is used for adjusting an occupation ratio and/or a dynamic usage range of each hardware resource by each thread according to the criticality degree of each hardware resource to each thread when the optimized compiling program is run.

For example, the criticality degree can indicate a demand degree of hardware resources for threads, for example, an importance level. For example, as mentioned above, if the lack of a certain hardware resource will interrupt or stall the thread 0 and this interruption or stalling has a great impact on the performance of the processor, the criticality degree of this hardware resource to the thread 0 is relatively high; and if the lack of a certain hardware resource will not interrupt or stall the thread 0, or even if the interruption or stalling occurs, it does not have much impact on the performance of the processor, the criticality degree of this hardware resource to the thread 0 is relatively low.

For example, the criticality degree can be defined by two states: "critical" and "non-critical".

For example, the criticality degree can be defined by multiple states. For example, the criticality degree can be scored. The higher the score is, the higher the criticality degree is, the more important it is to the thread or the higher the demand degree of the thread for the hardware resource is. When the criticality degree is defined by multiple states, compared with by two states, the importance level can be more detailed, and the adjustment on the allocation ratio of resources can be more reasonable.

For example, for one hardware resource, when some threads think that the hardware resource is important or critical to them, and some threads think that the hardware resource is not important or critical to them, adjusting the resource allocation ratios for these hardware resources can greatly improve the performance of the processor.

For example, in some embodiments, for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, the compiling indication information is used for instructing to decrease an allocation ratio of the any hardware resource allocated to the N threads or to limit a dynamic usage range of the N threads to the any hardware resource when the optimized compiling program is run.

For example, for a certain hardware resource, if the criticality degree of the hardware resource to M threads is greater than or equal to the first threshold, it means that the M threads think that the criticality degree of the hardware resource to themselves is high; and if the criticality degree of the hardware resource to N threads is less than or equal to the second threshold, it means that the N threads think that the criticality degree of the hardware resource is low. At this time, when the optimized compiling program is run, with reference to the compiling indication information generated in combination with the criticality degree of each hardware resource to each thread, the allocation ratio of the hardware resource to the N threads that think that the hardware resource is less important to themselves can be decreased, or the dynamic usage range of the hardware resource by the N threads can be limited.

Therefore, the waste of the hardware resource can be reduced, and the allocation ratio of this hardware resource to other threads is increased accordingly, for example, the allocation ratio of the resource to M threads is increased, so that the performance of the processor can be improved, and the number and duration of stalling or interruption of the thread pipeline caused by the lack of the hardware resource can be reduced.

For example, the first threshold and the second threshold can be set as required. For example, when the criticality degree includes two states, namely, critical and non-critical, the first threshold can be set as critical and the second threshold as non-critical. For example, when the criticality degree is measured by a score of 0-100, the first threshold can be set to 70, and the second threshold can be set to 30, which is not specifically limited by the present disclosure.

Subdividing the criticality degree, such as measuring the criticality degree of threads by adopting multiple states, can refine the criticality level, the comparison of the criticality degree between threads is more accurate, and the reasonability of resource allocation can be improved.

For example, in one example, the hardware resource is a cache. In this embodiment, the occupation situations of the different hardware resources by the processor in a process of executing the task include number of occupation times each thread occupies the cache. For example, the number of occupation times can be a number the cache data is reused in the cache, such as a number of cache hits.

For example, the determining a criticality degree of each hardware resource to each thread according to the occupation situations of the different hardware resources by the processor in the process of executing the task may include: for each thread: determining the criticality degree of the cache to the thread according to the number of occupation times the thread occupies the cache, where the less the number of occupation times the thread occupies the cache is, the lower the criticality degree of the cache to the thread is; where the compiling indication information is used for instructing to decrease an allocation ratio of the cache allocated to the N threads or to limit the N threads from selecting a cache line from cache lines occupied by the N threads for cache replacement when cache replacement occurs, when the optimized compiling program is run.

For example, the criticality degree may be critical or non-critical, when the number of occupation times a certain thread occupies the cache is less than an occupation times threshold of the cache, the criticality degree of the cache to the thread is determined as non-critical, and when the number of occupation times the thread occupies the cache is greater than or equal to the occupation times threshold, the criticality degree of the cache to the thread is determined as critical.

For example, the criticality degree can also be subdivided into more states. The less the number of occupation times the thread occupies the cache is, the lower the criticality degree of the cache to the thread is, and the lower the demand degree of the thread for the cache is.

For example, the compiling indication information may be generated in combination with the criticality degree of the cache to each thread. For example, the compiling indication information may include the criticality degree of the cache to each thread.

For example, when it is determined that the cache has lower criticality degree to a certain thread, for example, lower than the second threshold, or the criticality degree is non-critical, when running the optimized compiling program, the processor can know, with reference to the compiling indication information, that the cache has lower criticality degree to the thread, the processor can specify that the thread can only use part of the capacity in the cache, for example, it can only use 20% of the cache, or the processor can specify that when the thread has cache replacement, only one of cache lines previously applied for by the thread can be replaced with a new cache line, or the two ways can be combined in use. This can ensure that other threads are less affected by this thread when using the cache.

In this embodiment, the performance data collected in a program running process is used to perform profile analysis and guidance on the compiling optimization to adjust the allocation of multi-thread resources, such that the statically allocated hardware resources can be divided according to the characteristics of different threads, the dynamically allocated and multi-thread shared hardware resources can be controlled according to the usage profiles of different threads, so that some threads are prevented from preempting excessive resources but not helping to improve the performance, the hardware resources are allocated more reasonably and the performance of the processor is improved.

For example, in one example, the hardware resource is a branch target table. Various branch target table entries in the branch target table are used for storing information related to branch jumps.

For example, the occupation situations of the different hardware resources by the processor in the process of executing the task include branch prediction accuracy of each branch in each thread.

For example, the determining a criticality degree of each hardware resource to each thread according to the occupation situations of the different hardware resources by the processor in the process of executing the task may include: for each thread: determining the criticality degree of the branch target table to the thread according to a number of branches in the thread with branch prediction accuracy lower than an accuracy threshold, where higher the number of the branches in the thread with the branch prediction accuracy lower than the accuracy threshold is, the lower the criticality degree of the branch target table to the thread is; where the compiling indication information is used for instructing to decrease an allocation ratio of the branch target table allocated to the N threads or to limit the N threads from selecting a branch target table entry from the occupied branch target table entries when applying for the branch target table entries, when the optimized compiling program is run.

For example, the criticality degree can be critical or non-critical. When the number of branches in a certain thread with branch prediction accuracy lower than the accuracy threshold is greater than or equal to the occupation times threshold of the branches, that is, there are many branches in the thread that are difficult to predict accurately, it is determined that the criticality degree of the branch target table to the thread is non-critical; and when the number of branches in the thread with branch prediction accuracy lower than the accuracy threshold is less than the branch occupation times threshold, it is determined that the criticality degree of the branch target table to the thread is critical.

For example, the criticality degree can also be subdivided into more states. The higher the number of branches in a thread with the branch prediction accuracy lower than the accuracy threshold is, the lower the criticality degree of the branch target table to the thread is, and the lower the demand degree of the thread for the branch target table is.

For example, the compiling indication information may be generated in combination with the criticality degree of the branch target table to each thread. For example, the compiling indication information may include the criticality degree of the branch target table to each thread.

For example, when it is determined that the criticality degree of the branch target table to a certain thread is low, for example, lower than the second threshold, or the criticality degree is non-critical, when running the optimized compiling program, the processor can know, with reference to the compiling indication information, that the branch target table has lower criticality degree to the thread, the processor can specify, with reference to the compiling indication information, that the thread can only use part of the capacity in the branch target table, for example, it can only use 20% of the branch target table entries in the branch target table, or, the processor can specify that when the thread applies for a branch target entry, only one branch target entry that the thread applied for before can be selected for replacement, or the two ways can be combined in use. This can ensure that other threads are less affected by this thread when using the branch target table.

In this embodiment, the performance data collected in a program running process is used to perform profile analysis and guidance on the compiling optimization to adjust the allocation of multi-thread resources, such that the statically allocated hardware resources can be divided according to the characteristics of different threads, the dynamically allocated and multi-thread shared hardware resources can be controlled according to the usage profiles of different threads, so that some threads are prevented from preempting excessive resources but not helping to improve the performance, the hardware resources are allocated more reasonably and the performance of the processor is improved.

For example, in some embodiments, the occupation situations of the different hardware resources by the processor in the process of executing the task may also include the total occupation amount of each hardware resource by each thread in a preset time period for executing the task. For example, a preset time period for executing a task may refer to a certain period of time for running the compiling program corresponding to the task, or a partial period for running the compiling program within the whole period.

The determining a criticality degree of each hardware resource to each thread according to the occupation situations of the different hardware resources by the processor in the process of executing the task may include: determining the criticality degree of each hardware resource to each thread according to the total occupation amounts of the hardware resources by the plurality of threads.

For example, in some embodiments, the determining the criticality degree of each hardware resource to each thread according to the total occupation amounts of the hardware resources by the plurality of threads may include: for a first hardware resource of the different hardware resources: for each thread, in response to the total occupation amount of the first hardware resource by the thread being less than B/b, determining that the criticality degree of the first hardware resource to the thread is non-critical, where the first hardware resource is a hardware resource used exclusively by the plurality of threads separately, B represents a total resource amount of the first hardware resources, b represents a total number of the plurality of threads, and B and b are integers greater than 1; where, in response to the criticality degree of the first hardware resource to at least one thread of the plurality of threads being non-critical, the compiling indication information is used for instructing to allocate the first hardware resource for each thread in the at least one thread according to the total resource amount of the first hardware resource occupied by each thread when the optimized compiling program is run.

For example, the first hardware resource may be a hardware resource allocated in a statically allocated mode among the hardware resources. For example, it can be provided in advance that the various threads equally divide the first hardware resources, and each thread can use its own allocated part exclusively, without occupying the first hardware resources of other threads.

For example, if a certain thread runs for a period of time, the total occupation amount b' of the first hardware resource it uses for most of the time (for example, 95% or more of a whole running time period) is less than that of the equally divided first hardware resource (B/b), it means that the criticality degree of the first hardware resource to the thread is non-critical.

For example, the compiling indication information may be generated in combination with the criticality degree of the first hardware resource to each thread. For example, the compiling indication information may include the criticality degree of the first hardware resource to each thread.

For example, when it is determined that the criticality degree of the first hardware resource to a certain thread is low, for example, the criticality degree is non-critical, when running the optimized compiling program, the processor can know that the criticality degree of the first hardware resource to the thread is low with reference to the compiling indication information, and the processor can specify that only the total occupation amount b' of the first hardware resource used by the thread is allocated to the thread with reference to the compiling indication information.

For example, the total occupation amount b' of the first hardware resource used by the thread may also be included in the compiling indication information, and is provided to the processor for allocation reference through the compiling indication information.

In this embodiment, the performance data collected in a program running process is used to perform profile analysis and guidance on the compiling optimization to adjust the allocation of multi-thread resources, such that the statically allocated hardware resources can be divided according to the characteristics of different threads, the dynamically allocated and multi-thread shared hardware resources can be controlled according to the usage profiles of different threads, so that some threads are prevented from preempting excessive resources but not helping to improve the performance, the hardware resources are allocated more reasonably and the performance of the processor is improved.

For example, in another embodiments, the determining the criticality degree of each hardware resource to each thread according to the total occupation amounts of the hardware resources by the plurality of threads may include: for any hardware resource, determining a sum of the total occupation amounts of the any hardware resource by the plurality of threads according to the total occupation amount of the any hardware resource by each thread; in response to the sum of the total occupation amounts being greater than the total resource amount of the any hardware resource, determining a total duration of pipeline stalling when each thread lacks the any hardware resource; and determining the criticality degree of the any hardware resource to each thread according to the total duration of the pipeline stalling of each thread, where the total duration of the pipeline stalling is positively correlated with the criticality degree; where the compiling indication information is used for instructing to increase the allocation ratio of the any hardware resource to the thread with higher criticality degree and decrease the allocation ratio of the any hardware resource to the thread with lower criticality degree when the optimized compiling program is run.

For example, for a certain hardware resource A, it has been found that a total occupation amount of the hardware resource A by a certain thread (for example, a thread 0) is 90% in a running time period, and a total occupation amount of the hardware resource A by a certain thread (for example, a thread 1) is 20% in the running time period, that is, a sum of the total occupation amounts of the hardware resource A by two threads is 110%, which is greater than the total resource amount of the hardware resource A, that is, the two threads will undergo pipeline stalling caused by the lack of the hardware resource A.

At this time, a total duration t1 of pipeline stalling when the thread 0 lacks the hardware resource A and a total duration t2 of pipeline stalling when the thread 1 lacks the hardware resource A can be determined, and then, the criticality degree of the hardware resource A to each thread can be determined according to t1 and t2. For example, the longer the total duration t1 of pipeline stalling when the thread 0 lacks the hardware resource is, the higher the criticality degree of the hardware resource A to the thread 0 is; and the shorter the total duration t1 of pipeline stalling when the thread 0 lacks the hardware resource A is, the lower the criticality degree of the hardware resource A to the thread 0 is.

For example, if t2 is greater than t1, it is considered that the criticality degree of the hardware resource A to the thread 1 is higher than the criticality degree of the hardware resource A to the thread 0.

For example, the compiling indication information may be generated according to the criticality degree of the hardware resource A to each thread. For example, the compiling indication information may include the criticality degree of the hardware resource A to each thread.

For example, when running the optimized compiling program, the processor can know the criticality degree of the hardware resource A to two threads with reference to the compiling indication information; the processor can specify with reference to the compiling indication information that when running the optimized compiling program, the allocation ratio of the hardware resource A to a thread with higher criticality degree (such as the thread 1) is increased, and the allocation ratio of the hardware resource A to a thread with lower criticality degree (such as the thread 0) is decreased, for example, 80% of the hardware resource A can be allocated to the thread 0 and 20% of the hardware resource A can be allocated to the thread 1. Therefore, the pipeline stalling of the thread 1 can be avoided and the processor performance can be improved.

For example, the compiling indication information may also include the allocation ratios of the hardware resource A to two threads, which are provided to the processor for allocation reference through the compiling indication information.

In this embodiment, the performance data collected in a program running process is used to perform profile analysis and guidance on the compiling optimization to adjust the allocation of multi-thread resources, such that the statically allocated hardware resources can be divided according to the characteristics of different threads, the dynamically allocated and multi-thread shared hardware resources can be controlled according to the usage profiles of different threads, so that some threads are prevented from preempting excessive resources but not helping to improve the performance, the hardware resources are allocated more reasonably and the performance of the processor is improved.

For example, in some embodiments, the allocation ratio of a certain hardware resource to the thread with higher criticality degree to the hardware resource can be increased.

For any hardware resource, in response to the criticality degree of the any hardware resource to M threads of the plurality of threads being greater than a first threshold and the criticality degree of the any hardware resource to N threads of the plurality of threads being less than a second threshold, that is, the hardware resource is critical to some threads and less critical to others, the compiling indication information is used for instructing to increase the allocation ratio of the hardware resource to the M threads that think the hardware resource is critical to them when the optimized compiling program is run.

For example, the determining a criticality degree of each hardware resource to each thread according to the occupation situations of the different hardware resources by the processor in the process of executing the task include: determining a proportion of the total duration or stalling time of the pipeline stalling of each thread caused by the lack of the any hardware resource in the total running duration according to the duration of pipeline interruption or stalling of each thread when the thread lacks the any hardware resource and a number of times the thread lacks the any hardware resource; and determining the criticality degree of the thread to the any hardware resource according to the total duration or the proportion of the stalling time in the total running duration.

For example, for the hardware resource B, a proportion of the total duration or stalling time of the pipeline stalling of each thread caused by the lack of the hardware resource B in the total running duration is determined according to the duration of pipeline interruption or stalling of each thread when the thread lacks the hardware resource B and the number of times each thread lacks the hardware resource B. If the total duration of stalling is relatively long or the proportion of the stalling time in the total running duration is relatively large, it is determined that the criticality degree of the hardware resource B to the thread is relatively high. Conversely, if the total duration of stalling is relatively short or the proportion of the stalling time in the total running duration is relatively small, it is determined that the criticality degree of the hardware resource B to the thread is relatively low.

For example, for the thread 0, if the total duration of stalling is greater than a preset threshold or the proportion of stalling time in the total running duration is greater than the preset threshold, it is determined that the criticality degree of the hardware resource B to the thread 0 is critical, otherwise, it is determined that the criticality degree of the hardware resource B to the thread 0 is non-critical. Thus, the criticality degree of the hardware resource B to each thread can be determined.

For example, the compiling indication information may be generated according to the criticality degree of the hardware resource B to each thread. For example, the compiling indication information may include the criticality degree of the hardware resource B to each thread.

For example, the processor can know that the criticality degree of the hardware resource B to some threads is greater than the first threshold and that the criticality degree of the hardware resource B to some threads is less than the second threshold with reference to the compiling indication information, that is, the hardware resource B is critical to some threads and not critical to others. When running the optimized compiling program, the processor can specify, with reference to the compiling indication information, that the allocation ratio of the hardware resource B to M threads with the criticality degree greater than the first threshold is increased.

In this embodiment, the performance data collected in a program running process is used to perform profile analysis and guidance on the compiling optimization to adjust the allocation of multi-thread resources, such that the statically allocated hardware resources can be divided according to the characteristics of different threads, the dynamically allocated and multi-thread shared hardware resources can be controlled according to the usage profiles of different threads, so that some threads are prevented from preempting excessive resources but not helping to improve the performance, the hardware resources are allocated more reasonably and the performance of the processor is improved.

For example, in some embodiments, the allocation ratio of a certain hardware resource to N threads can be decreased, so that the allocation ratio of the hardware resource to other threads is increased accordingly. For example, in another embodiments, the allocation ratio of the hardware resource to M threads can be increased, so that the allocation ratio of the hardware resource to other threads is decreased accordingly. For example, in another embodiments, the allocation ratio of the hardware resource to N threads can be reduced, while the allocation ratio of the hardware resource to M threads can be increased, and the remaining hardware resources can be used for threads other than the M+N threads.

For example, the occupation situations of the different hardware resources by the processor in the process of running the task include any combinations of the following parameters: a number of occupation times each thread occupies each hardware resource, a number of stalling times of a pipeline when each thread lacks each hardware resource, a stalling duration of the pipeline when each thread lacks each hardware resource, the total occupation amount of each hardware resource by each thread, and the branch prediction accuracy of each branch in each thread.

Those skilled in the art can select parameters according to the hardware resources to be adjusted. For example, the criticality degree of each thread to the cache can be determined according to the number of occupation times the thread occupies the cache, the allocation ratio of the cache can be adjusted, and the usage range of each thread can be controlled, etc., which is not specifically limited by the present disclosure. Moreover, the occupation situation of the different hardware resources by the processor in the process of running the task can also include more other parameters, which are not limited to the above-mentioned parameters. Those skilled in the art can select and set the parameters as needed, which is not specifically limited by the present disclosure.

For example, when determining the criticality degree of each hardware resource to each thread according to the occupation situations of different hardware resources by the processor in the process of executing the task, for any hardware resource, one or more parameters can be adopted to judge the criticality degree, for example, the collected performance data for the hardware resource can be compared with a preset threshold, or the criticality degree of the hardware resource to each thread can be obtained by synthesizing a plurality of parameters, which is not specifically limited by the present disclosure.

As mentioned above, the adjustment on the allocation of the hardware resources of the processor can also include controlling the occupation timing of each thread occupying the hardware resource.

For example, the performance data includes the distribution of time when the plurality of threads occupy various hardware resources when the processor executes the task.

For example, step S20 may include: generating the compiling indication information in combination with the distribution of time when the plurality of threads occupy various hardware resources when the processor executes the task, where the compiling indication information is used for controlling an occupation timing of each thread occupying each hardware resource according to the distribution of time when the plurality of threads occupy various hardware resources when the optimized compiling program is run.

For example, the compiling indication information may include timing of the plurality of threads occupying various hardware resources, such as an occupation time point when a certain thread that requires controlling the occupation timing occupies a certain hardware resource. For example, when running the optimized compiling program, the processor may, by referring to the timing when the thread occupies a certain hardware resource known from the compiling indication information, reserve the target hardware resource for the thread when it is close to the timing when the thread uses the target hardware resource.

For example, the compiling indication information may include distribution of time when the plurality of threads occupy various hardware resources. For example, when running the optimized compiling program, the processor may, by referring to the distribution of time when a thread occupies a certain hardware resource known from the compiling indication information, analyze a timing when the thread occupies the hardware resource and reserve the target hardware resource for the thread when it is close to the timing when the thread uses the target hardware resource.

For example, by taking the thread 0 as an example, collecting the performance data can obtain the distribution of time when the thread 0 occupies a hardware resource C. For example, the distribution of time when the thread 0 occupies the hardware resource C may include that if the thread 0 does not need the hardware resource C at 0-100 seconds, and needs the hardware resource C at 100-200 seconds, the processor may reserve the hardware resource C for the thread 0 in advance at a time approaching the 100th second, for example, starting from the 90th second. For example, the released hardware resource C is no longer allocated to other threads, but is reserved for the thread 0. Therefore, the thread 0 can directly obtain the required hardware resource C when it needs to use the hardware resource C, and no pipeline stalling of the thread 0 is caused by the lack of the hardware resource C, thus improving the performance of the processor.

For example, in some embodiments, the performance data includes a dependency between hardware resources used by each thread in the process of executing the task by the processor.

For example, the dependency between the hardware resources used by each thread is obtained by occupation situations of a plurality of hardware resources during the pipeline stalling of each thread. For example, the plurality of hardware resources include other hardware resources of the different hardware resources except the hardware resource that directly leads to the pipeline stalling of the thread.

For example, step S20 may include: generating the compiling indication information in combination with the dependency between the hardware resources used by each thread, where the compiling indication information is used for controlling the occupation timing or a resource occupation priority of the thread occupying the hardware resources used by each thread according to the dependency between the hardware resources used by each thread when the optimized compiling program is run.

For example, in response to a dependency existing between P hardware resources used by the thread to execute a first operation, the P hardware resources includes a target hardware resource, and P is a positive integer greater than 1. At this time, when running the optimized compiling program, in combination with the compiling indication information generated based on the dependency between P hardware resources used by a thread, after obtaining the remaining P-1 hardware resources except the target hardware resource return the usage data needed for the first operation, the processor can allocate an occupation right of the target hardware resource to the thread, or improve the occupation priority of the thread to the target hardware resource.

For example, the target hardware resource needs to wait for other P-1 hardware resources to return the usage data needed to perform the first operation before it can be used, or the usage of the target hardware resource needs the usage data returned by other P-1 hardware resources.

For example, the compiling indication information may include the dependency between hardware resources used by each thread, such as the dependency between hardware resources used by a certain thread that requires controlling the occupation timing. For example, when running the optimized compiling program, the processor may, by referring to the dependency among P hardware resources used by the thread known from the compiling indication information, analyze the timing when the thread occupies the hardware resource; after obtaining usage data returned by the remaining P-1 hardware resources except the target hardware resource, the processor can allocate an occupation right of the target hardware resource to the thread, or improve the occupation priority of the thread to the target hardware resource.

For example, the compiling indication information may include the occupation timing of the thread occupying the target hardware resource. For example, the compiling indication information includes suggestion information, which describes that the target hardware resource can be occupied when all the other P-1 hardware resources except the target hardware resource of the thread return the usage data. For example, when running the optimized compiling program, by referring to the above-mentioned suggestion information that the thread occupies a certain hardware resource known from the compiling indication information, after obtaining the usage data returned by the remaining P-1 hardware resources except the target hardware resource, the processor may allocate the occupation right of the target hardware resource to the thread, or improve the occupation priority of the thread to the target hardware resource.

For example, by taking the thread 0 as an example, when the compiling program is run, the pipeline stalling or interruption of the thread 0 is caused by the lack of the hardware resource D. The occupation situations of other hardware resources except the hardware resource D by the thread 0 when the thread 0 stalls are collected to determine that the lack of the hardware resource D causes other hardware resources occupied by the thread 0 previously to be unable to be executed by the pipeline, for example, to determine that after the hardware resource D is obtained, the thread 0 will cause a failure in pipeline execution due to the lack of a hardware resource E. Therefore, for the thread 0, it can be determined that there is a dependency between two hardware resources (namely the hardware resource D and the hardware resource E) used by the thread 0 to perform the first operation, and the compiling indication information can be generated in combination with this dependency, such that when running the optimized compiling program, the processor can consider not occupying the hardware resource E at first, and then occupying the hardware resource E after the hardware resource D returns the usage data for performing the first operation. Specifically, an occupation right of the hardware resource E can be allocated to the thread 0 at this time, or the occupation priority of the hardware resource E by the thread 0 can be improved.

For example, in one specific example, even if the thread 0 preempts for a dynamically shared address generation unit queue, it still needs to wait for a value returned from the memory before it can be executed; before the memory returns the value, the thread 0 occupies a large number of address generation unit queues, which may cause another thread to stall due to the lack of the address generation unit queues, and has no improvement in the performance of the processor. At this time, the thread 0 may be allowed to not occupy the address generation unit queue first, and then the address generation unit queue is allocated to the thread 0 after the memory returns the value, or the occupation priority of the address generation unit by the thread 0 can be increased, for example, the thread 0 can preferentially use the address generation unit queue.

In this embodiment, the occupation timing of each thread occupying the hardware resource can be controlled, the allocation of the hardware resource can be adjusted reasonably to avoid a situation that the pipelines of other threads stall because some threads occupy excessive hardware resources but do not help to improve the performance, thereby improving the performance of the processor.

In practice, the performance data can be set as required to adjust the resource allocation ratio between the threads, or the occupation timing of each thread occupying the hardware resource can be controlled, or both the hardware allocation ratio and the occupation timing of the hardware resource are adjusted and controlled, which is not specifically limited by the present disclosure. Specific methods for adjusting the allocation ratio and controlling the occupation timing may refer to the description of the above-mentioned embodiments.

In at least an embodiment of the present disclosure, the performance data obtained when the compiling program of the task runs for a period of time can be collected, and the compiling program is a program compiled based on general rules; based on the occupation situations of different hardware resources by the processor in the performance data, the criticality degree of each hardware to the thread can be determined, and compiling indication information can be generated based on the criticality degree and can be used as a reference when the optimized compiling program is run. For example, the processor can partition the hardware resource based on the criticality degree, such as allocating more hardware resource to the thread with higher criticality degree and allocating less hardware resource to the thread with lower criticality degree, or limiting the usage range of the hardware resource by the thread with lower criticality degree, so as to allocate the hardware resource reasonably and allocate the hardware resource in a targeted manner according to program characteristics, thereby improving the performance of the processor to the greatest extent.

Moreover, in at least an embodiment of the present disclosure, compiling indication information is generated based on the distribution of time when the plurality of threads occupy various hardware resources or the dependency between hardware resources used by each thread in the performance data, and the compiling indication information can be used as a reference when the optimized compiling program is run. For example, the processor can control the occupation timing of the hardware resource according to the compiling indication information. For example, the processor can reserve the hardware resource at a moment approaching the time when the thread needs the hardware resource, or, for a plurality of hardware resources between which the dependency exists, the processor can wait until all the usage data required for executing the operation is ready before occupying the hardware resource, such that the dynamically allocated and shared resources can be controlled according to the usage profiles of different threads at the same time, so that some threads are prevented from preempting too many resources, but not helping to improve the performance, the hardware resources are reasonably allocated, and hardware resource allocation is carried out in a targeted manner according to the program characteristics, thereby improving the performance of the processor to the greatest extent.

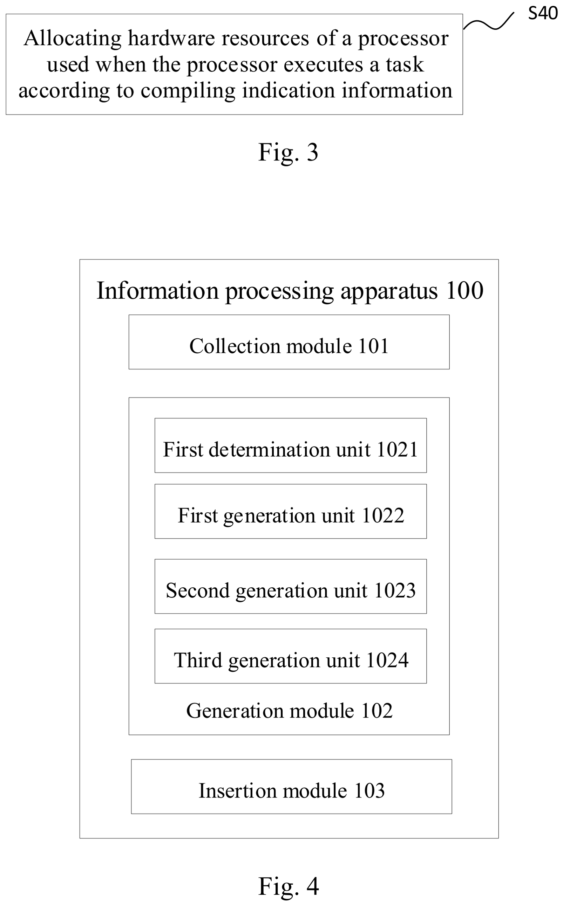

At least an embodiment of the present disclosure provides a resource allocation method. Fig. 3 is a schematic flowchart of a resource allocation method provided by at least an embodiment of the present disclosure.

For example, as shown in Fig. 3, a data processing method provided by the embodiment of the present disclosure at least includes steps S40.

For example, the resource allocation method is applied to a processor, such as a processor using the SMT technology. For example, the processor includes at least one processing core, which is a physical core. One processing core or runs a plurality of threads in parallel to execute a task, and the plurality of threads can be understood as a plurality of logical cores virtualized in one physical core.

For example, the processor can be implemented as a GPU (graphics processing unit), a CPU (central processing unit), an NPU (neural-network processing unit), a DSP (digital signal processor) and the like according to actual needs, which is not limited by the present disclosure.

In step S40, allocating hardware resources of a processor used when the processor executes a task according to compiling indication information.

The compiling indication information is generated according to performance data generated by the processor in a process of running a compiling program corresponding to the task, the processor simultaneously runs a plurality of threads to execute the task, and the performance data indicates a demand degree and/or a demand timing of each thread of the threads for different hardware resources in the processor.

For a process of collecting the performance data and a process of generating the compiling indication information based on the performance data, reference may be made to the relevant descriptions in the above-mentioned information processing methods, and the repeated part is omitted here.

For example, in some embodiments, step S40 may include: the criticality degree of each hardware resource to each thread is determined according to the compiling indication information; and an occupation ratio and/or a dynamic usage range of each hardware resource by each thread is adjusted according to the criticality degree of each hardware resource to each thread.

For example, the compiling indication information can directly contain the criticality degree of each hardware resource to each thread.

For example, the compiling indication information may include performance data, and the criticality degree of each hardware resource to each thread is determined by analyzing the performance data. Analyzing the performance data to obtain the criticality degree of each hardware resource to each thread may refer to the relevant contents in the above-mentioned information processing method, and the repeated part is omitted here.

For example, the adjusting an occupation ratio and/or a dynamic usage range of each hardware resource by each thread according to the criticality degree of each hardware resource to each thread may include: For any hardware resource, in response to the criticality degree of the any hardware resource to M threads of the plurality of threads being greater than or equal to a first threshold and the criticality degree of the any hardware resource to N threads of the plurality of threads being less than or equal to a second threshold, an allocation ratio of the any hardware resource allocated to the N threads is decreased or a dynamic usage range of the N threads to the any hardware resource is limited, where M and N are positive integers.

For example, for a certain hardware resource, if the criticality degree of the hardware resource to M threads is greater than or equal to the first threshold, it means that the M threads think that the criticality degree of the hardware resource to themselves is high; and if the criticality degree of the hardware resource to N threads is less than or equal to the second threshold, it means that the N threads think that the criticality degree of the hardware resource is low. At this time, when the optimized compiling program is run, with reference to the criticality degree of each hardware resource to each thread, the processor may decrease the allocation ratio of the hardware resource to the N threads that think that the hardware resource is less important to themselves, or limit the dynamic usage range of the hardware resource by the N threads. Therefore, the waste of the hardware resource can be reduced, and the allocation ratio of this hardware resource to other threads is increased accordingly, for example, the allocation ratio of the resource to M threads is increased, so that the performance of the processor can be improved, and the number and duration of stalling or interruption of the thread pipeline caused by the lack of the hardware resource can be reduced.

For example, in one example, the hardware resource is a cache. In this embodiment, the adjusting an occupation ratio and/or a dynamic usage range of each hardware resource by each thread according to the criticality degree of each hardware resource to each thread may include: An allocation ratio of the cache allocated to the N threads is decreased, or the N threads from selecting a cache line from cache lines occupied by the N threads for cache replacement when cache replacement occurs is limited.

For example, the task executed by a certain thread can be a streaming media application, in which a large amount of streaming media data is often used only once and will not be used again in the future. For example, when running the optimized compiling program, the processor can know, with reference to the compiling indication information, that the cache has lower criticality degree to the thread, the processor can specify that the thread can only use part of the capacity in the cache, for example, it can only use only 20% of the cache, or the processor can specify that when the thread has cache replacement, only one of cache lines previously applied for by the thread can be replaced with a new cache line, or the two ways can be combined in use. This can ensure that other threads are less affected by this thread when using the cache.

For example, in one example, the hardware resource is a branch target table. Various branch target table entries in the branch target table are used for storing information related to branch jumps.

The adjusting an occupation ratio and/or a dynamic usage range of each hardware resource by each thread according to the criticality degree of each hardware resource to each thread may include: decreasing an allocation ratio of the branch target table allocated to the N threads, or limiting the N threads from selecting a branch target table entry from the occupied branch target table entries when applying for the branch target table entries.

For example, there are many branches in a certain thread that are difficult to predict accurately. For example, when running the optimized compiling program, the processor can know, with reference to the compiling indication information, that the branch target table has lower criticality degree to the thread, the processor can specify, with reference to the compiling indication information, that the thread can only use part of the capacity in the branch target table, for example, it can only use 20% of the branch target table entries in the branch target table, or, the processor can specify that when the thread applies for a branch target entry, only one branch target entry that the thread applied for before can be selected for replacement, or the two ways can be combined in use. This can ensure that other threads are less affected by this thread when using the branch target table.

For example, in one example, the hardware resource is a first hardware resource, the first hardware resource can be allocated in a statically allocated mode among the hardware resources, and the first hardware resource is used exclusively by the plurality of threads separately.

The adjusting an occupation ratio and/or a dynamic usage range of each hardware resource by each thread according to the criticality degree of each hardware resource to each thread may include: in response to the criticality degree of the first hardware resource to at least one thread of the plurality of threads being non-critical, for each thread in the at least one thread, allocating the first hardware resource according to the total occupation amount of the first hardware resource occupied by each thread, where the total occupation amount of the first hardware resource occupied by each thread is determined in a process of collecting the performance data.

For example, if a certain thread runs for a period of time, the total occupation amount b' of the first hardware resource it uses for most of the time (for example, 95% or more of a whole running time period) is less than that of the equally divided first hardware resource (B/b), it means that the criticality degree of the first hardware resource to the thread is non-critical.

For this thread, the processor may only need to allocate the total occupation amount b' of the first hardware resource used by this thread to this thread.

For example, in some embodiments, for any hardware resource, the sum of the total occupation amounts of the hardware resource occupied by the plurality of threads is greater than the total resource amount of the hardware resource, that is, when these threads use the hardware resource, one thread will always undergo pipeline stalling due to the lack of the hardware resource. At this time, the adjusting an occupation ratio and/or a dynamic usage range of each hardware resource by each thread according to the criticality degree of each hardware resource to each thread includes: increasing the allocation ratio of the any hardware resource to the thread with higher criticality degree and decreasing the allocation ratio of the any hardware resource to the thread with lower criticality degree.

For example, the criticality degree can be determined according to the total duration of pipeline stalling of each thread when the thread lacks the hardware resource, or the criticality degree can be determined according to the proportion of the total duration of pipeline stalling of each thread in the whole running time when the thread lacks the hardware resource. For example, the longer the total duration of stalling is or the higher the proportion of the total duration of stalling is, the greater the impact of the pipeline stalling of this thread on the performance. The allocation ratio of the hardware resource to this thread can be increased and the allocation ratio of this hardware resource to other threads can be decreased at the same time. For example, if the plurality of threads occupy the hardware resource, the threads can be sorted from high to low according to the criticality degree, with the thread with higher criticality degree being allocated with a larger share of the hardware resource and the thread with the lowest criticality degree being allocated with the smallest share of the hardware resource.

For example, in some embodiments, the adjusting an occupation ratio and/or a dynamic usage range of each hardware resource by each thread according to the criticality degree of each hardware resource to each thread may include: for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, increasing an allocation ratio of the any hardware resource allocated to the M threads.

For example, the criticality degree can be determined according to the total duration of pipeline stalling of each thread when the thread lacks the hardware resource, or the criticality degree can be determined according to the proportion of the total duration of pipeline stalling of each thread in the whole running time when the thread lacks the hardware resource. For example, at this time, the allocation ratio of the hardware resource to those M threads that think the hardware resource is more critical to themselves can be increased.

For example, in some embodiments, the allocating hardware resources of a processor used when the processor executes a task according to compiling indication information may include: controlling an occupation timing or a resource occupation priority of each thread occupying each hardware resource according to the compiling indication information.

For example, the compiling indication information may include timing of the plurality of occupying various hardware resources, such as an occupation timing when a certain thread that requires controlling the occupation timing occupies a certain hardware resource. For example, when running the optimized compiling program, the processor may, by referring to the timing when the thread occupies a certain hardware resource known from the compiling indication information, reserve the target hardware resource for the thread when it is close to the timing when the thread uses the target hardware resource, or occupy the hardware resource (for example, a computing resource) when all the data required by the thread to execute an operation are in place.

For example, the compiling indication information may include distribution of time when the plurality of threads occupy various hardware resources. For example, when running the optimized compiling program, the processor may, by referring to the distribution of time when a thread occupies a certain hardware resource known from the compiling indication information, analyze a timing when the thread occupies the hardware resource and reserve the target hardware resource for the thread when it is close to the timing when the thread uses the target hardware resource.

For example, the compiling indication information may include a dependency between a plurality of hardware resources used by threads. For example, when running the optimized compiling program, the processor may, by referring to the dependency between a plurality of hardware resources used by the thread know from the compiling indication information, analyze the dependency, and specify that the hardware resource (for example, a computing resource) will be occupied when all the data required by the thread to perform the operation are in place.

For example, in response to a dependency existing between P hardware resources used by the thread to execute a first operation, the P hardware resources includes a target hardware resource, and P is a positive integer greater than 1. For example, the controlling an occupation timing or a resource occupation priority of each thread occupying each hardware resource according to the compiling indication information may include: allocating, according to the compiling indication information, an occupation right of the target hardware resource to the thread when usage data for the first operation returned by the remaining P-1 hardware resources except the target hardware resource is obtained, or improving the occupation priority of the thread to the target hardware resource.

For example, in another embodiments, there may be other resource allocation strategies for resource partitioning and occupation timing control. The present disclosure includes, but is not limited to, the above-mentioned resource allocation strategies, and the compiling indication information can be used to provide reference for a variety of different hardware resource allocation strategies.

In at least an embodiment of the present disclosure, the resource allocation method can provide reference for the processor to run the resource allocation of the optimized compiling program according to the compiling indication information. For example, the compiling indication information can be generated by collecting the performance data obtained by running the compiling program of the task for a period of time.

For example, the processor can partition the hardware resource according to the compiling indication information, allocate more hardware resource to the thread with higher criticality degree and allocate less hardware resource to the thread with lower criticality degree, or limit the usage range of the hardware resource by the thread with lower criticality degree, so as to allocate the hardware resource reasonably and allocate the hardware resource in a targeted manner according to program characteristics, thereby improving the performance of the processor to the greatest extent.

For example, the processor can control the occupation timing of the hardware resource according to the compiling indication information. For example, the processor can reserve the hardware resource at a moment approaching the time when the thread needs the hardware resource, or, for a plurality of hardware resources between which the dependency exists, the processor can wait until all the usage data required for executing the operation is ready before occupying the hardware resource, such that the dynamically allocated and shared resources can be controlled according to the usage profiles of different threads at the same time, so that some threads are prevented from preempting too many resources, but not helping to improve the performance, the hardware resources are reasonably allocated, and hardware resource allocation is carried out in a targeted manner according to the program characteristics, thereby improving the performance of the processor to the greatest extent.

Corresponding to the above-mentioned information processing method, at least an embodiment of the present disclosure also provides an information processing apparatus, and Fig. 4 is a schematic block diagram of an information processing apparatus provided by at least an embodiment of the present disclosure.

For example, as shown in Fig. 4, the information processing apparatus 100 at least includes: a collection module 101, a generation module 102 and an insertion module 103.

The collection module 101 is configured to collect performance data generated by a processor in a process of executing a task.

For example, the processor simultaneously runs a plurality of threads to execute the task, and the performance data indicates a demand degree and/or a demand timing of each thread of the threads for different hardware resources in the processor.

The generation module 102 is configured to generate compiling indication information corresponding to the task according to the performance data.

The insertion module 103 is configured to insert the compiling indication information into a compiling program of the task to obtain an optimized compiling program corresponding to the task, wherein the compiling indication information is used for allocating the hardware resources of the processor when the processor runs the optimized compiling program.

For example, the performance data includes occupation situations of the different hardware resources by the processor in the process of executing the task.

For example, as shown in Fig. 4, the generation module 102 includes a first determination unit 1021 and a first generation unit 1022.

The first determination unit 1021 is configured to determine a criticality degree of each hardware resource to each thread according to the occupation situations of the different hardware resources by the processor in the process of running the task.

The first generation unit 1022 is configured to generate the compiling indication information in combination with the criticality degree of each hardware resource to each thread, where the compiling indication information is used for adjusting an occupation ratio and/or a dynamic usage range of each hardware resource by each thread according to the criticality degree of each hardware resource to each thread when the optimized compiling program is run.

For example, for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, the compiling indication information is used for instructing to decrease an allocation ratio of the any hardware resource allocated to the N threads or to limit a dynamic usage range of the N threads to the any hardware resource when the optimized compiling program is run, where M and N are positive integers.

For example, any hardware resource includes a cache, and the occupation situations of the different hardware resources by the processor in a process of executing the task include number of occupation times each thread occupies the cache. For example, the first determination unit 1021 executes the operation of determining a criticality degree of each hardware resource to each thread according to the occupation situations of the different hardware resources by the processor in the process of executing the task, and includes executing the following operations: for each thread: determining the criticality degree of the cache to the thread according to the number of occupation times the thread occupies the cache, where the less the number of occupation times the thread occupies the cache is, the lower the criticality degree of the cache to the thread is; where the compiling indication information is used for instructing to decrease an allocation ratio of the cache allocated to the N threads or to limit the N threads from selecting a cache line from cache lines occupied by the N threads for cache replacement when cache replacement occurs, when the optimized compiling program is run.

For example, any hardware resource includes a branch target table. Various branch target table entries in the branch target table are used for storing information related to branch jumps. The occupation situations of the different hardware resources by the processor in the process of executing the task include branch prediction accuracy of each branch in each thread. For example, the first determination unit 1021 executes the operation of determining a criticality degree of each hardware resource to each thread according to the occupation situations of the different hardware resources by the processor in the process of executing the task, and includes executing the following operations: for each thread: determining the criticality degree of the branch target table to the thread according to a number of branches in the thread with branch prediction accuracy lower than an accuracy threshold, where higher the number of the branches in the thread with the branch prediction accuracy lower than the accuracy threshold is, the lower the criticality degree of the branch target table to the thread is; where the compiling indication information is used for instructing to decrease an allocation ratio of the branch target table allocated to the N threads or to limit the N threads from selecting a branch target table entry from the occupied branch target table entries when applying for the branch target table entries, when the optimized compiling program is run.

For example, the occupation situations of the different hardware resources by the processor in the process of executing the task may include the total occupation amount of each hardware resource by each thread in a preset time period for executing the task. For example, the first determination unit 1021 executes the operation of determining a criticality degree of each hardware resource to each thread according to the occupation situations of the different hardware resources by the processor in the process of executing the task, and includes executing the following operations: determining the criticality degree of each hardware resource to each thread according to the total occupation amounts of the hardware resources by the plurality of threads.

For example, the first determination unit 1021 executes the operation of determining the criticality degree of each hardware resource to each thread according to the total occupation amounts of the hardware resources by the plurality of threads, and includes executing the following operations: for a first hardware resource of the different hardware resources: for each thread, in response to the total occupation amount of the first hardware resource by the thread being less than B/b, determining that the criticality degree of the first hardware resource to the thread is non-critical, where the first hardware resource is a hardware resource used exclusively by the plurality of threads separately, B represents a total resource amount of the first hardware resources, b represents a total number of the plurality of threads, and B and b are integers greater than 1; where, in response to the criticality degree of the first hardware resource to at least one thread of the plurality of threads being non-critical, the compiling indication information is used for instructing to allocate the first hardware resource for each thread in the at least one thread according to the total resource amount of the first hardware resource occupied by each thread when the optimized compiling program is run.

For example, the first determination unit 1021 executes the operation of determining the criticality degree of each hardware resource to each thread according to the total occupation amounts of the hardware resources by the plurality of threads, and includes executing the following operations: for any hardware resource, determining a sum of the total occupation amounts of the any hardware resource by the plurality of threads according to the total occupation amount of the any hardware resource by each thread; in response to the sum of the total occupation amounts being greater than the total resource amount of the any hardware resource, determining a total duration of pipeline stalling when each thread lacks the any hardware resource; and determining the criticality degree of the any hardware resource to each thread according to the total duration of the pipeline stalling of each thread, where the total duration of the pipeline stalling is positively correlated with the criticality degree; where the compiling indication information is used for instructing to increase the allocation ratio of the any hardware resource to the thread with higher criticality degree and decrease the allocation ratio of the any hardware resource to the thread with lower criticality degree when the optimized compiling program is run.

For example, for any hardware resource, in response to the criticality degree of the any hardware resource to M threads of the plurality of threads being greater than a first threshold and the criticality degree of the any hardware resource to N threads of the plurality of threads being less than a second threshold, the compiling indication information is used for instructing to increase the allocation ratio of the hardware resource to the M threads when the optimized compiling program is run.

For example, the first determination unit 1021 executes the operation of determining a criticality degree of each hardware resource to each thread according to the occupation situations of the different hardware resources by the processor in the process of executing the task, and includes executing the following operations: determining a proportion of the total duration or stalling time of the pipeline stalling of each thread caused by the lack of the any hardware resource in the total running duration according to the duration of pipeline interruption or stalling of each thread when the thread lacks the any hardware resource and a number of times the thread lacks the any hardware resource; and determining the criticality degree of the thread to the any hardware resource according to the total duration or the proportion of the stalling time in the total running duration.

For example, the occupation situations of the different hardware resources by the processor in the process of running the task include any combinations of the following parameters: a number of occupation times each thread occupies each hardware resource, a number of stalling times of a pipeline when each thread lacks each hardware resource, a stalling duration of the pipeline when each thread lacks each hardware resource, the total occupation amount of each hardware resource by each thread, and the branch prediction accuracy of each branch in each thread.

For example, the performance data includes the distribution of time when the plurality of threads occupy various hardware resources when the processor executes the task.

For example, as shown in Fig. 4, the generation module 102 further includes a second generation unit 1023.

The second generation unit 1023 is configured to generate the compiling indication information in combination with the distribution of time when the plurality of threads occupy various hardware resources when the processor executes the task, where the compiling indication information is used for controlling an occupation timing of each thread occupying each hardware resource according to the distribution of time when the plurality of threads occupy various hardware resources when the optimized compiling program is run.

For example, the compilation instruction information is used, when running the optimized compiling program, to reserve the target hardware resource for the thread according to the distribution of time when the plurality of threads occupy various hardware resources when it is close to the timing when the thread uses the target hardware resource.

For example, the performance data includes a dependency between hardware resources used by each thread in the process of executing the task by the processor.

For example, as shown in Fig. 4, the generation module 102 further includes a third generation unit 1024.

For example, the third generation unit 1024 is configured to generate the compiling indication information in combination with the dependency between the hardware resources used by each thread, where the compiling indication information is used for controlling the occupation timing or a resource occupation priority of the thread occupying the hardware resources used by each thread according to the dependency between the hardware resources used by each thread when the optimized compiling program is run.

For example, in response to a dependency existing between P hardware resources used by the thread to execute a first operation, the P hardware resources includes a target hardware resource, and P is a positive integer greater than 1. The compiling indication information is used for instructing to, allocate an occupation right of the target hardware resource to the thread, or improve the occupation priority of the thread to the target hardware resource, after obtaining the remaining P-1 hardware resources except the target hardware resource return the usage data needed for the first operation when running the optimized compiling program.

For example, the dependency between the hardware resources used by each thread is obtained by occupation situations of a plurality of hardware resources during the pipeline stalling of each thread. where the plurality of hardware resources include other hardware resources of the different hardware resources except the hardware resource that directly leads to the pipeline stalling of the thread.

For example, the hardware resources in the processor comprise computing resources and storage resources, the computing resources comprise an arithmetic and logic unit and an address generation unit, and the storage resources comprise a cache, an internal memory, a queue and a register.

For example, the processor comprises at least one physical core, and the plurality of threads run in the same physical core.

It should be noted that the collection module 101 is configured to implement step S10 shown in Fig. 2, the generation module 102 is configured to implement step S20 shown in Fig. 2, and the insertion module 103 is configured to implement step S30 shown in Fig. 2. Therefore, the specific description of the collection module 101 may refer to the related description of step S10 shown in Fig. 2 in the embodiment of the above-mentioned information processing method, the specific description of the generation module 102 may refer to the related description of step S20 shown in Fig. 2 in the embodiment of the above-mentioned information processing method, and the specific description of the insertion module 103 may refer to the related description of step S30 shown in Fig. 2 in the embodiment of the above-mentioned information processing method. Moreover, the information processing apparatus can achieve technical effects similar to those of the aforementioned information processing method, which are omitted here.

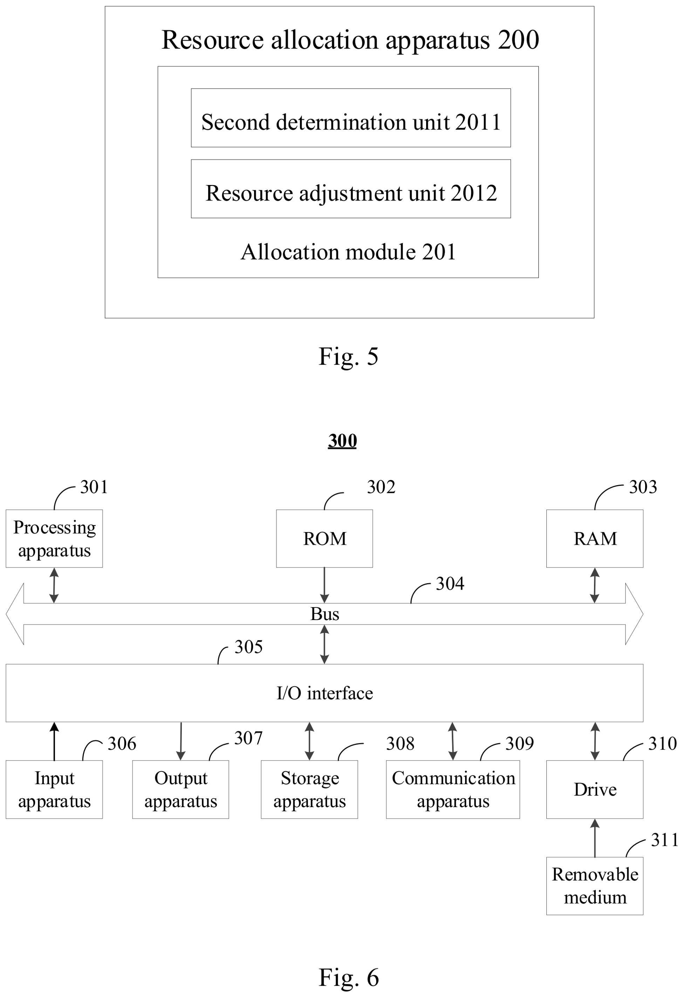

At least an embodiment of the present disclosure also provides a resource allocation apparatus. Fig. 5 is a schematic block diagram of another resource allocation apparatus provided by at least an embodiment of the present disclosure.

For example, as shown in Fig. 5, the resource allocation apparatus 200 at least includes: an allocation module 201.

For example, the allocation module 201 is configured to allocate hardware resources of a processor used when the processor executes a task according to compiling indication information, where the compiling indication information is generated according to performance data generated by the processor in a process of executing a compiling program corresponding to the task, the processor simultaneously runs a plurality of threads to execute the task, and the performance data indicates a demand degree and/or a demand timing of each thread of the threads for different hardware resources in the processor.

For example, the allocation module 201 includes a second determination unit 2011 and a resource adjustment unit 2012.

The second determination unit 2011 is configured to determine the criticality degree of each hardware resource to each thread according to the compiling indication information.

The resource adjustment unit 2012 is configured to adjust an occupation ratio and/or a dynamic usage range of each hardware resource by each thread according to the criticality degree of each hardware resource to each thread.

For example, the resource adjustment unit 2012 executes the operation of adjusting an occupation ratio and/or a dynamic usage range of each hardware resource by each thread according to the criticality degree of each hardware resource to each thread, and includes executing the following operations: for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, an allocation ratio of the any hardware resource allocated to the N threads is decreased or a dynamic usage range of the N threads to the any hardware resource is limited, where M and N are positive integers.

For example, any hardware resource includes a cache, the resource adjustment unit 2012 executes the operation of adjusting an occupation ratio and/or a dynamic usage range of each hardware resource by each thread according to the criticality degree of each hardware resource to each thread, and includes executing the following operations: an allocation ratio of the cache allocated to the N threads is decreased, or the N threads from selecting a cache line from cache lines occupied by the N threads for cache replacement when cache replacement occurs is limited.

For example, any hardware resource includes a branch target table. Various branch target table entries in the branch target table are used for storing information related to branch jumps. The resource adjustment unit 2012 executes the operation of adjusting an occupation ratio and/or a dynamic usage range of each hardware resource by each thread according to the criticality degree of each hardware resource to each thread, and includes executing the following operations: decreasing an allocation ratio of the branch target table allocated to the N threads, or limiting the N threads from selecting a branch target table entry from the occupied branch target table entries when applying for the branch target table entries.

For example, any hardware resource includes a first hardware resource. The first hardware resource is used exclusively by the plurality of threads separately. The resource adjustment unit 2012 executes the operation of adjusting an occupation ratio and/or a dynamic usage range of each hardware resource by each thread according to the criticality degree of each hardware resource to each thread, and includes executing the following operations: in response to the criticality degree of the first hardware resource to at least one thread of the plurality of threads being non-critical, for each thread in the at least one thread, allocating the first hardware resource according to the total occupation amount of the first hardware resource occupied by each thread, where the total occupation amount of the first hardware resource occupied by each thread is determined in a process of collecting the performance data.

For example, the resource adjustment unit 2012 executes the operation of adjusting an occupation ratio and/or a dynamic usage range of each hardware resource by each thread according to the criticality degree of each hardware resource to each thread, and includes executing the following operations: for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, increasing an allocation ratio of the any hardware resource allocated to the M threads.

For example, the resource adjustment unit 2012 executes the operation of allocating hardware resources of a processor used when the processor executes a task according to compiling indication information, and includes executing the following operations: controlling an occupation timing or a resource occupation priority of each thread occupying each hardware resource according to the compiling indication information.

For example, in response to a dependency existing between P hardware resources used by the thread to execute a first operation, the P hardware resources includes a target hardware resource, and P is a positive integer greater than 1. The resource adjustment unit 2012 executes the operation of controlling an occupation timing or a resource occupation priority of each thread occupying each hardware resource according to the compiling indication information, and includes executing the following operations: allocating, according to the compiling indication information, an occupation right of the target hardware resource to the thread when usage data returned by the remaining P-1 hardware resources except the target hardware resource is obtained, or improving the occupation priority of the thread to the target hardware resource.

It should be noted that the allocation module 201 is configured to implement step S40 shown in Fig. 3. Therefore, the specific description of the allocation module 201 may refer to the related description of step S40 shown in Fig. 3 in the embodiment of the above-mentioned data communication method. Moreover, the resource allocation apparatus can achieve technical effects similar to those of the aforementioned resource allocation method, which are omitted here.

Fig. 6 is a structural schematic diagram of an electronic device provided by at least an embodiment of the present disclosure. The terminal devices in the embodiments of the present disclosure may include, but not limited to, mobile terminals such as a mobile phone, a notebook computer, a digital broadcast receiver, a personal digital assistant (PDA), a tablet computer (PAD), a portable multimedia player (PMP), a vehicle-mounted terminal (for example, a vehicle-mounted navigation terminal) and the like, and fixed terminals such as a digital TV, a desktop computer and the like. The electronic device shown in Fig. 6 is only an example, and should not bring any limitation to the functions and application scope of the embodiments of the present disclosure.

For example, as shown in Fig. 6, in some examples, the electronic device 300 includes a processing apparatus (such as a central processing unit, a graphics processing unit, etc.) 301, which can perform various appropriate actions and processes according to a program stored in a read-only memory (ROM) 302 or a program loaded from a storage apparatus 308 into a random-access memory (RAM) 303, such as executing the information processing method or the resource allocation method provided by at least an embodiment of the present disclosure. In the RAM 303, various programs and data required for the operation of the computer system are also stored. The processing apparatus 301, the ROM 302 and the RAM 303 are connected through a bus 304. An input/output (I/O) interface 305 is also connected to the bus 304.

For example, the following components may be connected to the I/O interface 305: an input apparatus 306 including, for example, a touch screen, a touch pad, a keyboard, a mouse, a camera, a microphone, an accelerometer, a gyroscope, etc.; an output apparatus 307 including a liquid crystal display (LCD), a speaker, a vibrator, etc.; and a storage apparatus 308 such as a magnetic tape, a hard disk, etc.; and a communication apparatus 309 including a network interface card such as an LAN card, a modem, etc. The communication apparatus 309 may allow the electronic device 300 to perform wireless or wired communication with other devices to exchange data and perform communication processing via a network such as the Internet. A drive 310 is also connected to the I/O interface 305 as needed. A removable medium 311, such as a magnetic disk, an optical disk, a magneto-optical disk, a semiconductor memory, etc., is installed on the drive 310 as needed, so that a computer program read from it can be installed into the storage apparatus 309 as needed. Although Fig. 6 shows the electronic device 300 including various apparatuses, it should be understood that not all the apparatuses as shown are required to be implemented or included. More or fewer apparatuses may alternatively be implemented or included.

For example, the electronic device 300 may further include a peripheral interface (not shown) and the like. The peripheral interface can be various types of interfaces, such as a USB interface, a lighting interface, etc. The communication apparatus 309 can communicate with a network (such as the Internet, an intranet and/or a wireless network such as a cellular telephone network, a wireless local area network (LAN) and/or a metropolitan area network (MAN)) and other devices through wireless communication. Wireless communication can use any of a variety of communication standards, protocols and technologies, including but not limited to Global System for Mobile Communications (GSM), Enhanced Data GSM Environment (EDGE), Wideband Code Division Multiple Access (W-CDMA), Code Division Multiple Access (CDMA), Time Division Multiple Access (TDMA), Bluetooth, Wi-Fi (for example, based on IEEE 802. 11a, IEEE 802. 11b, IEEE 802. 11g and/or IEEE 802. 11n standards), Voice over Internet Protocol (VoIP), Wi-MAX, protocols for email, instant messaging and/or short message service (SMS), or any other suitable communication protocol.

For example, the electronic device may be any device such as a mobile phone, a tablet computer, a notebook computer, an e-book, a game machine, a television, a digital photo frame, a navigator, etc., and may also be any combination of electronic devices and hardware, which is not limited by the embodiments of the present disclosure.

For example, according to the embodiments of the present disclosure, processes described above with reference to the flowchart may be implemented as a computer software program. For example, an embodiment of the present disclosure includes a computer program product, which includes a computer program carried on a non-transitory computer-readable medium, the computer program including program codes for performing the method shown in the flowchart. In such an embodiment, the computer program may be downloaded and installed from a network through the communication apparatus 309, or installed from the storage apparatus 308, or installed from the ROM 302. When the computer program is executed by the processing apparatus 301, the information processing method or the resource allocation method defined in the method of the embodiment of the present disclosure is executed.

It should be noted that the computer-readable medium mentioned above in the present disclosure may be a computer-readable signal medium or a computer-readable storage medium or any combination of both. The computer-readable storage medium may be, for example, but not limited to, an electrical, magnetic, optical, electromagnetic, infrared, or semiconductor system, apparatus or device, or a combination of any of the above. More specific examples of the computer-readable storage medium may include, but not limited to: an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In an embodiment of the present disclosure, the computer-readable storage medium may be any tangible medium containing or storing a program, which program may be used by or in combination with an instruction execution system, apparatus or device. In an embodiment of the present disclosure, the computer-readable signal medium may include a data signal propagated in a baseband or as part of a carrier wave, in which computer-readable program codes are carried. This propagated data signal may take multiple forms, including but not limited to electromagnetic signals, optical signals or any suitable combination of the above. The computer-readable signal medium may also be any computer-readable medium other than the computer-readable storage medium, and may send, propagate or transmit a program used by or in combination with an instruction execution system, apparatus or device. The program codes contained in the computer-readable medium may be transmitted by any suitable medium, including but not limited to: electric wires, optical cables, radio frequency (RF) and the like, or any suitable combination of the above.

In some implementations, the client and the server can communicate by using any currently known or future developed network protocol such as a hypertext transfer protocol (HTTP), and may be interconnected with digital data communication in any form or medium (for example, a communication network). Examples of the communication network include a local area network (LAN), a wide area network (WAN), the Internet work (for example, the Internet) and an end-to-end network (for example, an ad hoc end-to-end network), as well as any currently known or future developed networks.

The computer-readable medium may be included in the electronic device; or it may exist alone without being assembled into the electronic device.

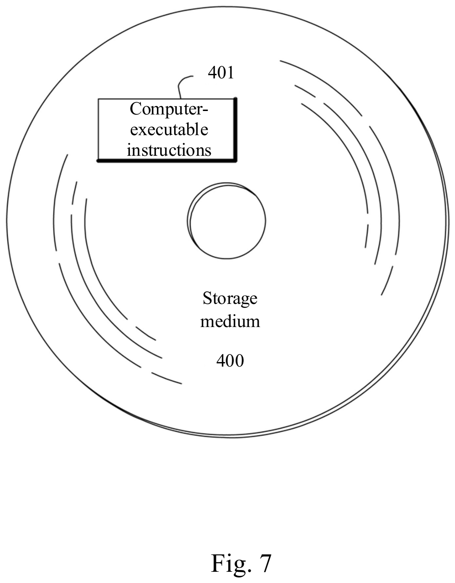

Fig. 7 is a schematic diagram of a non-transitory computer-readable storage medium provided by at least an embodiment of the present disclosure. For example, as shown in Fig. 7, one or more computer-executable instructions 401 may be temporarily stored on a storage medium 400. For example, when the computer-executable instructions 401 are executed by a processor, one or more steps in the information processing method described above or one or more steps in the resource allocation method described above may be performed.

For example, the storage medium 400 may be applied to the above-mentioned electronic device. For example, the storage medium 400 may include a memory 1003 in the electronic device.

For example, the description of the storage medium 400 may refer to the description of the memory in the embodiment of the electronic device, which is omitted here.

Those skilled in the art can understand that various variations and improvements may occur in the content disclosed in the present disclosure. For example, the various devices or components described above can be implemented by hardware, or can be implemented by software, firmware, or a combination of some or all of the three.

In addition, although the present disclosure makes various references to certain units in the system according to the embodiments of the present disclosure, however, any number of different units can be used and run on the client and/or the server. The units are merely illustrative, and different aspects of the system and method can use different units.

Flowcharts are used in the present disclosure to illustrate the steps of the method according to the embodiments of the present disclosure. It should be understood that the preceding or following steps are not necessarily carried out precisely in sequence. Instead, various steps can be processed in reverse order or simultaneously. At the same time, other operations can also be added to these processes.

Those of ordinary skill in the art can understand that all or part of the steps in the above method can be completed by instructing relevant hardware through a computer program, and the program can be stored in a computer-readable storage medium, such as a read-only memory, a magnetic disk or an optical disc. Optionally, all or part of the steps of the above embodiments can also be implemented using one or more integrated circuits. Correspondingly, each module/unit in the above embodiments can be implemented in the form of hardware, or can also be implemented in the form of a software functional module. The present disclosure is not limited to any specific combination of hardware and software.

Unless otherwise defined, all terms used herein have the same meaning as commonly understood by those of ordinary skill in the art to which the present disclosure belongs. It should also be understood that terms such as those defined in a general dictionary should be interpreted as having meanings consistent with their meanings in the context of the relevant technology, and should not be interpreted in an idealized or overly formal sense, unless explicitly defined otherwise herein.

## Claims

1. An information processing method, comprising:
collecting performance data generated by a processor in a process of executing a task, wherein the processor simultaneously runs a plurality of threads to execute the task, and the performance data indicates a demand degree and/or a demand timing of each thread of the threads for different hardware resources in the processor;
generating compiling indication information corresponding to the task according to the performance data; and
inserting the compiling indication information into a compiling program of the task to obtain an optimized compiling program corresponding to the task, wherein the compiling indication information is used for allocating the hardware resources of the processor when the processor runs the optimized compiling program.

2. The information processing method according to claim 1,
wherein the performance data comprises occupation situations of the different hardware resources by the processor in the process of running the task, and
wherein the generating compiling indication information corresponding to the task according to the performance data comprises:
determining a criticality degree of each hardware resource to each thread according to the occupation situations of the different hardware resources by the processor in the process of running the task; and
generating the compiling indication information in combination with the criticality degree of each hardware resource to each thread, wherein the compiling indication information is used for adjusting an occupation ratio and/or a dynamic usage range of each hardware resource by each thread according to the criticality degree of each hardware resource to each thread when the optimized compiling program is run.

3. The information processing method according to claim 2, wherein, for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, the compiling indication information is used for instructing to decrease an allocation ratio of the any hardware resource allocated to the N threads or to limit a dynamic usage range of the N threads to the any hardware resource when the optimized compiling program is run,
where M and N are positive integers.

4. The information processing method according to claim 3, wherein the any hardware resource comprises a cache,
wherein the occupation situations of the different hardware resources by the processor in the process of running the task comprise a number of occupation times each thread occupies the cache, and
wherein the determining a criticality degree of each hardware resource to each thread according to the occupation situations of the different hardware resources by the processor in the process of running the task comprises:
for each thread:
determining the criticality degree of the cache to the thread according to the number of occupation times the thread occupies the cache, wherein the less the number of occupation times the thread occupies the cache is, the lower the criticality degree of the cache to the thread is;
wherein the compiling indication information is used for instructing to decrease an allocation ratio of the cache allocated to the N threads, or to limit the N threads from selecting a cache line from cache lines occupied by the N threads for cache replacement when cache replacement occurs, when the optimized compiling program is run.

5. The information processing method according to claim 3 or 4, wherein the any hardware resource comprises a branch target table, and various branch target table entries in the branch target table are used for storing information related to branch jumps,
wherein the occupation situations of the different hardware resources by the processor in the process of running the task comprise branch prediction accuracy of each branch in each thread,
wherein the determining a criticality degree of each hardware resource to each thread according to the occupation situations of the different hardware resources by the processor in the process of running the task comprises:
for each thread:
determining the criticality degree of the branch target table to the thread according to a number of branches in the thread with branch prediction accuracy lower than an accuracy threshold, wherein the higher the number of the branches in the thread with the branch prediction accuracy lower than the accuracy threshold is, the lower the criticality degree of the branch target table to the thread is;
wherein the compiling indication information is used for instructing to decrease an allocation ratio of the branch target table allocated to the N threads, or to limit the N threads from selecting a branch target table entry from occupied branch target table entries when applying for the branch target table entries, when the optimized compiling program is run.

6. The information processing method according to any one of claims 2-5, wherein the occupation situations of the different hardware resources by the processor in the process of running the task comprise the total occupation amount of each hardware resource by each thread in a preset time period for running the task, and
wherein the determining a criticality degree of each hardware resource to each thread according to the occupation situations of the different hardware resources by the processor in the process of running the task comprises:
determining the criticality degree of each hardware resource to each thread according to the total occupation amounts of the hardware resources by the plurality of threads.

7. The information processing method according to claim 6, wherein the determining the criticality degree of each hardware resource to each thread according to the total occupation amounts of the hardware resources by the plurality of threads comprises:
for a first hardware resource of the different hardware resources:
for each thread, in response to the total occupation amount of the first hardware resource by the thread being less than B/b, determining that the criticality degree of the first hardware resource to the thread is non-critical, wherein the first hardware resource is a hardware resource used exclusively by the plurality of threads separately, B represents a total resource amount of the first hardware resources, b represents a total number of the plurality of threads, and B and b are integers greater than 1;
wherein, in response to the criticality degree of the first hardware resource to at least one thread of the plurality of threads being non-critical, the compiling indication information is used for instructing to allocate the first hardware resource for each thread in the at least one thread according to the total occupation amount of the first hardware resource occupied by each thread when the optimized compiling program is run.

8. The information processing method according to claim 6, wherein the determining the criticality degree of each hardware resource to each thread according to the total occupation amounts of the hardware resources by the plurality of threads comprises:
for any hardware resource, determining a sum of the total occupation amounts of the any hardware resource by the plurality of threads according to the total occupation amount of the any hardware resource by each thread;
in response to the sum of the total occupation amounts being greater than a total resource amount of the any hardware resource:
determining a total duration of pipeline stalling when each thread lacks the any hardware resource; and
determining the criticality degree of the any hardware resource to each thread according to the total duration of the pipeline stalling of each thread, wherein the total duration of the pipeline stalling of each thread is positively correlated with the criticality degree;
wherein the compiling indication information is used for instructing to increase the allocation ratio of the any hardware resource to the thread with higher criticality degree and decrease the allocation ratio of the any hardware resource to the thread with lower criticality degree when the optimized compiling program is run.

9. The information processing method according to any one of claims 2-8, wherein, for any hardware resource, in response to the criticality degree of the any hardware resource to M threads of the plurality of threads being greater than a first threshold and the criticality degree of the any hardware resource to N threads of the plurality of threads being less than a second threshold, the compiling indication information is used for instructing to increase an allocation ratio of the any hardware resource allocated to the M threads when the optimized compiling program is run.

10. The information processing method according to claim 9, wherein the determining a criticality degree of each hardware resource to each thread according to the occupation situations of the different hardware resources by the processor in the process of running the task comprises:
determining a proportion of a total duration or stalling time of the pipeline stalling of each thread caused by a lack of the any hardware resource in the total running duration according to a duration of pipeline interruption or stalling of each thread when the thread lacks the any hardware resource and a number of times the thread lacks the any hardware resource; and
determining the criticality degree of the thread to the any hardware resource according to the total duration or the proportion.

11. The information processing method according to any one of claims 2-10, wherein the occupation situations of the different hardware resources by the processor in the process of running the task comprise any combinations of the following parameters:
a number of occupation times each thread occupies each hardware resource, a number of stalling times of a pipeline when each thread lacks each hardware resource, a stalling duration of the pipeline when each thread lacks each hardware resource, the total occupation amount of each hardware resource by each thread, and branch prediction accuracy of each branch in each thread.

12. The information processing method according to any one of claims 1-11, wherein the performance data comprises distribution of time when the plurality of threads occupy various hardware resources when the processor runs the task, and
wherein the generating compiling indication information corresponding to the task according to the performance data comprises:
generating the compiling indication information in combination with the distribution of time when the plurality of threads occupy various hardware resources when the processor runs the task, wherein the compiling indication information is used for controlling an occupation timing of each thread occupying each hardware resource according to the distribution of time when the plurality of threads occupy various hardware resources when the optimized compiling program is run.

13. The information processing method according to claim 12, wherein the compiling indication information is used for reserving a target hardware resource for the thread when a usage timing of the target hardware resource is approaching according to the distribution of time when the plurality of threads occupy various hardware resources when the optimized compiling program is run.

14. The information processing method according to any one of claims 1-13, wherein the performance data comprises a dependency between hardware resources used by each thread in the process of running the task by the processor,
wherein the generating compiling indication information corresponding to the task according to the performance data comprises:
generating the compiling indication information in combination with the dependency between the hardware resources used by each thread, wherein the compiling indication information is used for controlling an occupation timing or a resource occupation priority of the thread occupying the hardware resources used by each thread according to the dependency between the hardware resources used by each thread when the optimized compiling program is run.

15. The information processing method according to claim 14, wherein, in response to a dependency existing between P hardware resources used by the thread to execute a first operation, the P hardware resources comprises a target hardware resource, and P is a positive integer greater than 1,
wherein the compiling indication information is used for instructing to allocate an occupation right of the target hardware resource to the thread after remaining P-1 hardware resources except the target hardware resource return usage data required for executing the first operation, or to improve the resource occupation priority of the thread to the target hardware resource, when the optimized compiling program is run.

16. The information processing method according to claim 14 or 15, wherein the dependency between the hardware resources used by each thread is obtained by occupation situations of a plurality of hardware resources during pipeline stalling of each thread, wherein the plurality of hardware resources comprise other hardware resources of the different hardware resources except the hardware resource that directly leads to the pipeline stalling of the thread.

17. The information processing method according to any one of claims 1-16, wherein the hardware resources in the processor comprise computing resources and storage resources,
wherein the computing resources comprise an arithmetic and logic unit and an address generation unit, and
wherein the storage resources comprise a cache, an internal memory, a queue and a register.

18. The information processing method according to any one of claims 1-17, wherein the processor comprises at least one physical core, and the plurality of threads run in the same physical core.

19. A resource allocation method, comprising:
allocating hardware resources of a processor used when the processor executes a task according to compiling indication information, wherein the compiling indication information is generated according to performance data generated by the processor in a process of running a compiling program corresponding to the task, the processor simultaneously runs a plurality of threads to execute the task, and the performance data indicates a demand degree and/or a demand timing of each thread of the threads for different hardware resources in the processor.

20. The resource allocation method according to claim 19, wherein the allocating hardware resources of a processor used when the processor executes a task according to compiling indication information comprises:
determining a criticality degree of each hardware resource to each thread according to the compiling indication information; and
adjusting an occupation ratio and/or a dynamic usage range of each hardware resource by each thread according to the criticality degree of each hardware resource to each thread.

21. The resource allocation method according to claim 20, wherein the adjusting an occupation ratio and/or a dynamic usage range of each hardware resource by each thread according to the criticality degree of each hardware resource to each thread comprises:
for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, decreasing an allocation ratio of the any hardware resource allocated to the N threads or to limit a dynamic usage range of the N threads to the any hardware resource, where M and N are positive integers.

22. The resource allocation method according to claim 21, wherein the any hardware resource comprises a cache,
wherein the adjusting an occupation ratio and/or a dynamic usage range of each hardware resource by each thread according to the criticality degree of each hardware resource to each thread comprises:
decreasing an allocation ratio of the cache allocated to the N threads, or limiting the N threads from selecting a cache line from cache lines occupied by the N threads for cache replacement when cache replacement occurs.

23. The resource allocation method according to claim 21 or 22, wherein the any hardware resource comprises a branch target table, and various branch target table entries in the branch target table are used for storing information related to branch jumps,
wherein the adjusting an occupation ratio and/or a dynamic usage range of each hardware resource by each thread according to the criticality degree of each hardware resource to each thread comprises:
decreasing an allocation ratio of the branch target table allocated to the N threads, or limiting the N threads from selecting a branch target table entry from the occupied branch target table entries when applying for the branch target table entries.

24. The resource allocation method according to any one of claims 20-23, wherein the any hardware resource comprises a first hardware resource, and the first hardware resource is used exclusively by the plurality of threads separately,
wherein the adjusting an occupation ratio and/or a dynamic usage range of each hardware resource by each thread according to the criticality degree of each hardware resource to each thread comprises:
in response to the criticality degree of the first hardware resource to at least one thread of the plurality of threads being non-critical, for each thread in the at least one thread, allocating the first hardware resource according to the total occupation amount of the first hardware resource occupied by each thread, wherein the total occupation amount of the first hardware resource occupied by each thread is determined in a process of collecting the performance data.

25. The resource allocation method according to any one of claims 20-24, wherein the adjusting an occupation ratio and/or a dynamic usage range of each hardware resource by each thread according to the criticality degree of each hardware resource to each thread comprises:
for any hardware resource, in response to the criticality degree of the any hardware resource to M threads of the plurality of threads being greater than or equal to a first threshold and the criticality degree of the any hardware resource to N threads of the plurality of threads being less than or equal to a second threshold, increasing an allocation ratio of the any hardware resource allocated to the M threads.

26. The resource allocation method according to any one of claims 19-25, wherein the allocating hardware resources of a processor used when the processor executes a task according to compiling indication information comprises:
controlling an occupation timing or a resource occupation priority of each thread occupying each hardware resource according to the compiling indication information.

27. The resource allocation method according to claim 26, wherein, in response to a dependency existing between P hardware resources used by the thread to execute a first operation, the P hardware resources comprises a target hardware resource, and P is a positive integer greater than 1,
wherein the controlling an occupation timing or a resource occupation priority of each thread occupying each hardware resource according to the compiling indication information comprises:
allocating, according to the compiling indication information, an occupation right of the target hardware resource to the thread after the remaining P-1 hardware resources except the target hardware resource return usage data required for executing the first operation, or improving the resource occupation priority of the thread to the target hardware resource.

28. An information processing apparatus, comprising:
a collection module configured to collect performance data generated by a processor in a process of executing a task, wherein the processor simultaneously runs a plurality of threads to execute the task, and the performance data indicates a demand degree and/or a demand timing of each thread of the threads for different hardware resources in the processor;
a generation module configured to generate compiling indication information corresponding to the task according to the performance data; and
an insertion module configured to insert the compiling indication information into a compiling program of the task to obtain an optimized compiling program corresponding to the task, wherein the compiling indication information is used for allocating the hardware resources of the processor when the processor runs the optimized compiling program.

29. A resource allocation apparatus, comprising:
an allocation module configured to allocate hardware resources of a processor used when the processor executes a task according to compiling indication information, wherein the compiling indication information is generated according to performance data generated by the processor in a process of running a compiling program corresponding to the task, the processor simultaneously runs a plurality of threads to execute the task, and the performance data indicates a demand degree and/or a demand timing of each thread of the threads for different hardware resources in the processor.

30. An electronic device, comprising:
a memory in which computer-executable instructions are stored non-instantaneously;
a processor configured to run the computer-executable instructions,
wherein the computer-executable instructions, when run by the processor, implement the information processing method according to any one of claims 1-18 or execute the resource allocation method according to any one of claims 19-27.

31. A non-transitory computer-readable storage medium, wherein the non-transitory computer-readable storage medium stores computer-executable instructions which, when executed by a processor, implements the information processing method according to any one of claims 1-18 or execute the resource allocation method according to any one of claims 19-27.
